# EUROPEAN PATENT APPLICATION

(11) **EP 4 804 618 A1**
(43) Date of publication of application: **09.09.2026**
(21) Application number: 24893148.7
(22) Date of filing: 24.10.2024
(51) Int. Cl.: H04W 36/00

(54) **COMMUNICATION METHOD AND APPARATUS**

(30) Priority: 22.11.2023 CN 202311573573
(71) Applicant: Huawei Technologies Co., Ltd., Shenzhen, Guangdong 518129 (CN)
(72) Inventor: ZHANG, Yangyang, Shenzhen, Guangdong 518129 (CN); XIE, Xi, Shenzhen, Guangdong 518129 (CN); MA, Siqi, Shenzhen, Guangdong 518129 (CN); YU, Zheng, Shenzhen, Guangdong 518129 (CN)
(74) Representative: Körber, Martin Hans
(86) International application number: PCT/CN2024/127157
(87) International publication number: WO 2025/107990

(57) **Abstract**

This application provides a communication method and apparatus. The method includes: A terminal device receives first indication information, where the first indication information may indicate whether inter-frequency measurement of the terminal device is allowed to be performed by a low-power wake-up receiver, or the first indication information may indicate whether inter-frequency measurement of the terminal device is allowed to be performed by a main receiver. Because indicated content of the first indication information may be dynamically adjusted, the first indication information may dynamically indicate a specific receiver that performs the inter-frequency measurement of the terminal device. This can dynamically indicate the inter-frequency measurement, thereby improving user experience.

## Description

### CROSS-REFERENCE TO RELATED APPLICATIONS

This application claims priority to Chinese Patent Application No. 202311573573.9, filed with the China National Intellectual Property Administration on November 22, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Cell measurement is one of content of a radio resource management (Radio Resource Management, RRM) function, and aims to monitor communication quality of a serving cell and/or a neighboring cell of user equipment (user equipment, UE) in real time, so that when signal quality of the serving cell deteriorates to a specific extent, the serving cell of the UE is changed through handover or cell selection/reselection, to ensure service continuity of the UE. In a communication system, UE may perform two types of cell measurements, including intra-frequency measurement and inter-frequency measurement. The intra-frequency measurement means that a cell in which the UE is currently located and a target cell to be measured are on a same carrier frequency (a center frequency or a BWP (Bandwidth Part) frequency). The inter-frequency measurement means that a cell in which the UE is currently located and a target cell are not on a same carrier frequency (a center frequency or a BWP frequency).

When the UE needs to perform inter-frequency measurement (including inter-RAT measurement) in each measurement period (for example, a discontinuous reception (discontinuous reception, DRX) period), one processing manner is to install two types of radio frequency receivers in the UE, to separately measure a frequency of the current cell and a frequency of the target cell. However, this processing manner causes problems of increased costs and mutual interference between different frequencies. To resolve the foregoing problem, the 3rd generation partnership project (3rd Generation Partnership Project, 3GPP) proposes a measurement gap (measurement gap)-based measurement manner. To be specific, a part of time (namely, time of a measurement gap) is reserved, during which the UE does not send or receive any data, and the receiver is adjusted to the frequency of the target cell, to implement inter-frequency measurement for the UE. Then, when the time of the measurement gap ends, the UE adjusts the receiver to the frequency of the current cell. Therefore, currently, inter-frequency measurement of a terminal device with two types of radio frequency receivers still needs to be further studied.

### SUMMARY

This application provides a communication method and apparatus, to dynamically indicate inter-frequency measurement, thereby improving user experience.

According to a first aspect, this application provides a communication method. The method may be performed by a first communication apparatus. Optionally, the first communication apparatus may be a terminal device or a module (for example, a processor, a chip, a chip system, or a circuit) of a terminal device. Alternatively, the method may be implemented by a logical node, a logical module, or software that can implement all or a part of functions of the terminal device. For example, the following uses an example in which the terminal device performs the communication method. The method may include the following steps: The terminal device receives first indication information, where the first indication information may indicate whether inter-frequency measurement of the terminal device is allowed to be performed by a low-power wake-up receiver, or the first indication information may indicate whether inter-frequency measurement of the terminal device is allowed to be performed by a main receiver.

In this method, indicated content of the first indication information may be dynamically adjusted. Therefore, the first indication information may dynamically indicate a specific receiver that performs the inter-frequency measurement of the terminal device. Then, after receiving the first indication information, the terminal device can effectively perform the inter-frequency measurement. This can dynamically indicate (or may be understood as flexibly indicate) the inter-frequency measurement, and can ensure reasonability and accuracy of performing the inter-frequency measurement by the terminal device, thereby improving user experience.

In a possible design, the first indication information may include a first parameter, where the first parameter may indicate that the inter-frequency measurement of the terminal device is allowed to be performed by the main receiver or is allowed to be performed by the low-power wake-up receiver.

In the foregoing design, the terminal device can learn, in a timely and effective manner based on an indication of the first parameter, whether the inter-frequency measurement of the terminal device is performed by the main receiver or the low-power wake-up receiver. This can flexibly indicate the inter-frequency measurement.

In a possible design, when the first indication information includes a first parameter, the first indication information indicates that the inter-frequency measurement of the terminal device is allowed to be performed by the main receiver, or indicates that the inter-frequency measurement of the terminal device is not allowed to be performed by the low-power wake-up receiver; or when the first indication information does not include the first parameter, the first indication information indicates that the inter-frequency measurement of the terminal device is allowed to be performed by the low-power wake-up receiver, or indicates that the inter-frequency measurement of the terminal device is not allowed to be performed by the main receiver.

In the foregoing design, whether the first parameter appears in the first indication information indicates whether the inter-frequency measurement of the terminal device is performed by the main receiver or the low-power wake-up receiver. This can also flexibly indicate the inter-frequency measurement.

In a possible design, when the first indication information indicates that the inter-frequency measurement of the terminal device is not allowed to be performed by the low-power wake-up receiver, or the first indication information indicates that the inter-frequency measurement of the terminal device is allowed to be performed by the main receiver, the first indication information may further indicate an execution rule for the main receiver to perform the inter-frequency measurement. The execution rule may be any one of the following: The main receiver does not perform inter-frequency measurement period relaxation when performing the inter-frequency measurement of the terminal device, or the main receiver performs inter-frequency measurement period relaxation by m times when performing the inter-frequency measurement of the terminal device, where m may be any value in {3, 5, 7, 10, 20}.

In the foregoing design, when the inter-frequency measurement of the terminal device is allowed to be performed by the main receiver or the inter-frequency measurement of the terminal device is not allowed to be performed by the low-power wake-up receiver, whether the inter-frequency measurement period relaxation needs to be performed when the main receiver performs the inter-frequency measurement of the terminal device is determined based on an actual situation or an actual scenario, considering a power consumption problem of the main receiver. For example, when the main receiver needs to perform the inter-frequency measurement period relaxation when performing the inter-frequency measurement of the terminal device, the first indication information may indicate a specific number of times by which an inter-frequency measurement period needs to be relaxed. This can help reduce power consumption (for example, power consumption) of the terminal device.

In a possible design, the first indication information may further indicate whether a measurement gap corresponding to the inter-frequency measurement of the terminal device takes effect.

In the foregoing design, one piece of indication information is used to indicate a receiver that performs the inter-frequency measurement of the terminal device, and indicates whether the measurement gap corresponding to the inter-frequency measurement of the terminal device takes effect. In this way, signaling overheads and resource overheads can be reduced, and the terminal device can learn of the two indications at the same time.

In a possible design, when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the first indication information may further indicate that the measurement gap corresponding to the inter-frequency measurement of the terminal device does not take effect.

In the foregoing design, the first indication information indicates that the measurement gap corresponding to the inter-frequency measurement of the terminal device does not take effect, so that when a time domain resource position corresponding to data transmission (or service transmission) overlaps with a time domain resource position corresponding to the measurement gap, data transmission (or service transmission) for the terminal device is not interrupted, thereby helping ensure that the data transmission (or the service transmission) can be completed within a transmission delay requirement, and improving user experience.

In a possible design, the method further includes: The terminal device may receive second indication information, where the second indication information may also indicate whether a measurement gap corresponding to the inter-frequency measurement of the terminal device takes effect.

In the foregoing design, the second indication information indicates whether the measurement gap corresponding to the inter-frequency measurement of the terminal device takes effect. In this way, load of the first indication information can be reduced, indication overheads of the first indication information can be reduced, and the terminal device can be prevented from misunderstanding a real indication of the first indication information due to a large amount of content indicated by the first indication information.

In a possible design, when the first indication information indicates that the inter-frequency measurement of the terminal device is performed by the low-power wake-up receiver, or the first indication information indicates that the inter-frequency measurement of the terminal device is not allowed to be performed by the main receiver, the second indication information may indicate that the measurement gap corresponding to the inter-frequency measurement of the terminal device does not take effect.

In the foregoing design, the second indication information indicates that the measurement gap corresponding to the inter-frequency measurement of the terminal device does not take effect, so that when a time domain resource position corresponding to data transmission (or service transmission) overlaps with a time domain resource position corresponding to the measurement gap, data transmission (or service transmission) for the terminal device is not interrupted, thereby helping ensure that the data transmission (or the service transmission) can be completed within a transmission delay requirement, and improving user experience.

In a possible design, the method further includes: The terminal device may send fourth indication information, where the fourth indication information may include at least one of the following: a power consumption requirement, a coverage requirement, a performance requirement, a delay requirement, a receiver that is expected to perform the inter-frequency measurement, whether an inter-frequency measurement gap is expected to take effect, or that the first indication information is expected to be sent to indicate that the inter-frequency measurement is performed by the low-power wake-up receiver.

In the foregoing design, the fourth indication information is sent, so that a receive side (for example, a network device) can determine indicated content of the first indication information based on the fourth indication information. Therefore, the indicated content of the first indication information can meet an actual requirement of the terminal device. This helps avoid an unnecessary error caused by that the indicated content of the first indication information does not meet the actual requirement of the terminal device.

According to a second aspect, this application provides a communication method. The method may be performed by a second communication apparatus. Optionally, the second communication apparatus may be a network device or a module (for example, a processor, a processing unit, a chip, a chip system, or a circuit) of a network device. Alternatively, the method may be implemented by a logical node, a logical module, or software that can implement all or a part of functions of the network device. For example, the following uses an example in which the network device performs the communication method. The method may include the following steps: The network device sends first indication information, where the first indication information may indicate whether inter-frequency measurement of a terminal device is allowed to be performed by a low-power wake-up receiver, or the first indication information may indicate whether inter-frequency measurement of a terminal device is allowed to be performed by a main receiver.

For technical effect that can be achieved in the second aspect, refer to the technical effect that can be achieved in the first aspect. Details are not described herein again.

In a possible design, the first indication information may include a first parameter, where the first parameter may indicate that the inter-frequency measurement of the terminal device is allowed to be performed by the main receiver or is allowed to be performed by the low-power wake-up receiver.

In a possible design, when the first indication information includes a first parameter, the first indication information indicates that the inter-frequency measurement of the terminal device is allowed to be performed by the main receiver, or indicates that the inter-frequency measurement of the terminal device is not allowed to be performed by the low-power wake-up receiver; or when the first indication information does not include the first parameter, the first indication information indicates that the inter-frequency measurement of the terminal device is performed by the low-power wake-up receiver.

In a possible design, when the first indication information indicates that the inter-frequency measurement of the terminal device is not allowed to be performed by the low-power wake-up receiver, or the first indication information indicates that the inter-frequency measurement of the terminal device is allowed to be performed by the main receiver, the first indication information may further indicate an execution rule for the main receiver to perform the inter-frequency measurement. The execution rule may be any one of the following: The main receiver does not perform inter-frequency measurement period relaxation when performing the inter-frequency measurement of the terminal device, or the main receiver performs inter-frequency measurement period relaxation by m times when performing the inter-frequency measurement of the terminal device, where m may be any value in {3, 5, 7, 10, 20}.

In a possible design, the first indication information may further indicate whether a measurement gap corresponding to the inter-frequency measurement of the terminal device takes effect.

In a possible design, when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the first indication information may further indicate that the measurement gap corresponding to the inter-frequency measurement of the terminal device does not take effect.

In a possible design, the method further includes: The network device may send second indication information, where the second indication information may indicate whether a measurement gap corresponding to the inter-frequency measurement of the terminal device takes effect.

In a possible design, when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the second indication information may indicate that the measurement gap corresponding to the inter-frequency measurement of the terminal device does not take effect.

In a possible design, the method further includes: The network device may receive fourth indication information from the terminal device, where the fourth indication information may include at least one of the following: a power consumption requirement, a coverage requirement, a performance requirement, a delay requirement, a receiver that is expected to perform the inter-frequency measurement, whether an inter-frequency measurement gap is expected to take effect, or that the first indication information is expected to be sent to indicate that the inter-frequency measurement is performed by the low-power wake-up receiver.

In a possible design, the method further includes: The network device may determine indicated content of the first indication information based on the fourth indication information.

In a possible design, the method further includes: The network device may determine the indicated content of the first indication information based on a value relationship between a delay threshold of a first service and a specified delay threshold, where the first service is a downlink service received by the terminal device.

In the foregoing design, the value relationship between the delay threshold of the first service and the specified delay threshold is compared, so that it can be accurately determined whether the inter-frequency measurement of the terminal device is performed by the low-power wake-up receiver or the main receiver, and whether the measurement gap corresponding to the inter-frequency measurement of the terminal device takes effect.

In a possible design, the method further includes: The network device receives third indication information, where the third indication information may include the delay threshold of the first service.

For example, the third indication information may be from a core network.

In the foregoing design, the delay threshold of the first service is obtained, so that the network device can determine whether the first service is a service with a high requirement for transmission delay or a service with a low requirement for transmission delay.

According to a third aspect, this application provides a communication apparatus. Optionally, the communication apparatus may be a communication device (for example, a first communication apparatus or a second communication apparatus) or a component (for example, a processor, a chip, a chip system, or a circuit) that can support a communication device in implementing a function required by a communication method. For example, the first communication apparatus may be a terminal device or a module (for example, a processor, a chip, a chip system, or a circuit) of a terminal device, or may be a logical node, a logical module, or software that can implement all or a part of functions of the terminal. The second communication apparatus may be a network device or a module (for example, a processor, a chip, a chip system, or a circuit) of a network device, or may be a logical node, a logical module, or software that can implement all or a part of functions of the network device. When the communication apparatus is a chip disposed in the first communication apparatus (or the second communication apparatus), the communication apparatus includes a transceiver and a processor, but does not include a memory. The transceiver exists as an input/output interface, and the input/output interface is used by the chip to implement sending/receiving of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the first communication apparatus (or the second communication apparatus) is implemented. Optionally, when the chip implements a corresponding function of the first communication apparatus (or the second communication apparatus) in the communication method embodiments provided in this application, the input/output interface may implement sending and receiving operations performed by the first communication apparatus (or the second communication apparatus) in the communication method embodiments provided in this application, and the processor may implement an operation other than the sending and receiving operations performed by the first communication apparatus (or the second communication apparatus) in the communication method embodiments provided in this application.

In a possible design, the communication apparatus has a function of implementing behavior in the method example in the first aspect or the second aspect. For beneficial effect, refer to the related descriptions in the first aspect to the second aspect. Details are not described herein again. The function may be implemented by using hardware, or may be implemented by executing corresponding software by hardware. The hardware or the software includes one or more modules corresponding to the foregoing function. For example, the communication apparatus may be the terminal device in the first aspect, or the communication apparatus may be the network device in the second aspect. For example, the communication apparatus includes corresponding means (means) or modules configured to perform the method according to the first aspect or the second aspect. For example, the communication apparatus includes a processing module (or referred to as a processing unit) and/or a communication module (or referred to as a communication unit, a transceiver module, or a transceiver unit, configured to send and receive data). The communication module can implement a sending function and a receiving function. When the communication module implements the sending function, the communication module may be referred to as a sending unit (or may be referred to as a sending module). When the communication module implements the receiving function, the communication module may be referred to as a receiving unit (or may be referred to as a receiving module). The sending unit and the receiving unit may be a same functional unit, and the functional unit is referred to as a communication module, where the functional unit can implement the sending function and the receiving function. Alternatively, the sending unit and the receiving unit may be different functional units, and the communication module is a general term for these functional units. These modules (units) may perform corresponding functions in the method example in the first aspect or the second aspect. For details, refer to the detailed descriptions in the method example. Details are not described herein again.

According to a fourth aspect, this application provides a communication apparatus. The communication apparatus may be a communication apparatus (for example, a first communication apparatus or a second communication apparatus) configured to perform the communication method provided in this application, or may be a device including a communication apparatus configured to perform the communication method provided in this application, or may be a device having a function of implementing the communication method. The communication apparatus may include a transceiver and a processor. Optionally, the communication apparatus may further include a memory. The memory is configured to store a computer program or instructions. The processor is coupled to the memory and the transceiver. When the processor executes the computer program or the instructions, the communication apparatus is enabled to perform the method according to any possible design of the first aspect or the method according to any possible design of the second aspect.

According to a fifth aspect, this application provides a communication system. The communication system may include the first communication apparatus (for example, the terminal device) and the second communication apparatus (for example, the network device) mentioned in the first aspect or the second aspect. For implementation of a related function of the first communication apparatus or the second communication apparatus, refer to the related descriptions mentioned in the first aspect or the second aspect. Details are not described herein again.

For example, the communication system may include one or more first communication apparatuses and one or more second communication apparatuses.

According to a sixth aspect, this application provides a computer program product. The computer program product includes a computer program or instructions. When the computer program or the instructions are run on a computer, the computer is enabled to perform the method in any possible design of the first aspect or the method in any possible design of the second aspect.

According to a seventh aspect, this application provides a computer-readable storage medium. The computer-readable storage medium stores a computer program or instructions. When the computer program or the instructions are executed by a computer, the computer is enabled to perform the method in any possible design of the first aspect or the method in any possible design of the second aspect.

According to an eighth aspect, this application provides a chip. The chip may include a processor, and may further include a memory (or the chip is coupled to the memory). The chip executes program instructions in the memory, to perform the method in any possible design of the first aspect or the method in any possible design of the second aspect. "Coupling" means that two components are directly or indirectly combined with each other. For example, coupling may refer to an electrical connection between the two components.

According to a ninth aspect, this application further provides a chip system. The chip system includes a processor, configured to support a computer apparatus in implementing the method in any possible design of the first aspect or the method in any possible design of the second aspect. In a possible design, the chip system further includes a memory, and the memory is configured to store a program and data that are necessary for the computer apparatus. The chip system may include a chip, or may include a chip and another discrete component.

Based on the implementations provided in the foregoing aspects, the implementations in this application may be further combined to provide more implementations.

### BRIEF DESCRIPTION OF DRAWINGS

FIG. 1 illustrates a possible communication system architecture according to an embodiment of this application;
FIG. 2 illustrates a procedure of a communication method according to an embodiment of this application;
FIG. 3a illustrates a diagram in which a time domain resource of data transmission (or service transmission) does not overlap with that of a measurement gap according to an embodiment of this application;
FIG. 3b illustrates a diagram in which a time domain resource of data transmission (or service transmission) overlaps with that of a measurement gap according to an embodiment of this application;
FIG. 4 illustrates a service switching scenario according to an embodiment of this application;
FIG. 5 illustrates a structure of a communication apparatus according to an embodiment of this application; and
FIG. 6 illustrates a structure of another communication apparatus according to an embodiment of this application.

### DESCRIPTION OF EMBODIMENTS

The following describes in detail embodiments of this application with reference to accompanying drawings.

The following describes a possible communication system architecture to which a communication method provided in this application is applicable. It should be noted that these descriptions are for ease of understanding by a person skilled in the art, and are not intended to limit the protection scope claimed by this application.

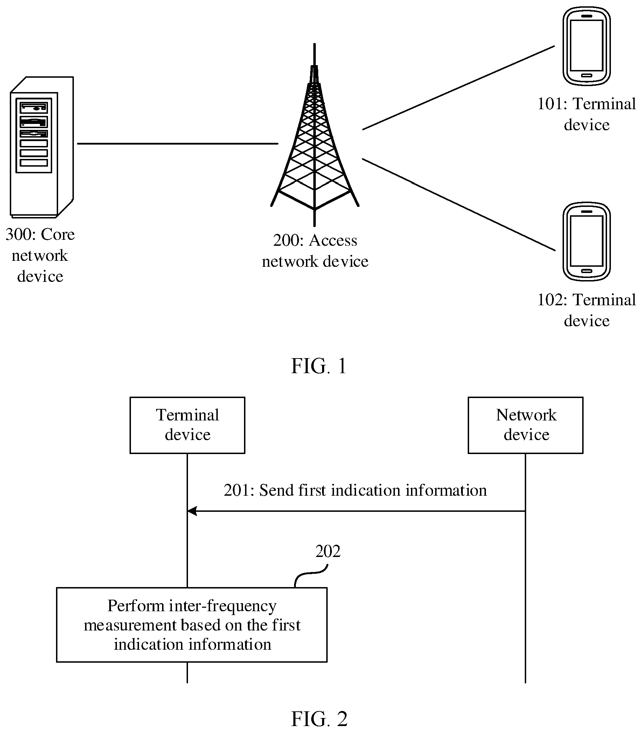

FIG. 1 illustrates a possible communication system architecture to which an embodiment of this application is applicable. As shown in FIG. 1, the communication system architecture includes at least one terminal device (for example, a terminal device 101 and a terminal device 102), an access network (for example, an (R)AN) device 200, and a core network (core network, CN) device 300. Optionally, the communication system architecture may further include the internet. For example, the terminal device (for example, the terminal device 101 or the terminal device 102) may be connected to the access network device 200 in a wireless manner, and the access network device 200 may be connected to the core network device 300 in a wireless or wired manner. The core network device 300 and the access network device 200 may be independent and different physical devices, or functions of the core network device 300 and logical functions of the access network device 200 may be integrated into a same physical device, or a part of functions of the core network device and a part of functions of the radio access network device may be integrated into one physical device. Terminal devices may be connected to each other in a wired or wireless manner, and access network devices may be connected to each other in a wired or wireless manner. For example, the communication system architecture may further include another network device (for example, a wireless relay device or a wireless backhaul device).

The following briefly describes functions of a part of devices included in the communication system architecture.

The terminal device is an entity that has a signal sending and receiving function on a user side, and may provide service functions such as video, voice, and data connectivity for a user. For example, the terminal device is an entrance for a mobile user to interact with a network, and can provide a basic computing capability and storage capability, display a service window to the user, and receive an operation input of the user. A next-generation terminal device (NextGen UE) may establish a signal connection and a data connection to the access network device 200 by using a new radio technology, to transmit a control signal and service data to a mobile network.

Optionally, the terminal device may also be referred to as a terminal, user equipment (user equipment, UE), an access terminal device, a vehicle-mounted terminal, an industrial control terminal, a UE unit, a UE station, a mobile station, a mobile station (mobile station, MS), a mobile terminal (mobile terminal, MT), a remote station, a remote terminal device, a mobile device, a UE terminal device, a terminal device, a wireless communication device, a UE agent, a UE apparatus, or the like. In this embodiment of this application, the terminal device (for example, the terminal device 101 or the terminal device 102) may be fixed or may be mobile. This is not limited in embodiments of this application. For example, the terminal device (for example, the terminal device 101 or the terminal device 102) may be deployed on land, including an indoor or outdoor terminal device, a handheld terminal device, a wearable terminal device, or a vehicle-mounted device terminal device, or may be deployed on water (for example, on a ship), or may be deployed in the air (for example, on an airplane, a balloon, or a satellite).

For example, the terminal device (for example, the terminal device 101 or the terminal device 102) may be a mobile phone (mobile phone), a tablet computer (Pad), customer-premises equipment (customer-premises equipment, CPE), a subscriber unit (subscriber unit), a cellular phone (cellular phone), a smartphone (smartphone), a wireless data card, a personal digital assistant (personal digital assistant, PDA) computer, a wireless modem (modem), a handset (handset), a laptop computer (laptop computer), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, a vehicle, an uncrewed aerial vehicle, a helicopter, an airplane, a factory machine/device, a machine type communication (machine type communication, MTC) terminal, a ship, or a robot. Neither a specific technology nor a specific device form used by the terminal device is limited in embodiments of this application.

The access network device 200 may sometimes also be referred to as a RAN entity, a RAN node, a network device, an access node, or the like, constitutes a part of a communication system, and is configured to help the terminal device (for example, the terminal device 101 or the terminal device 102) implement wireless access. For example, the access network device 200 may provide a network access function for an authorized user in a specific area, and may determine, based on a user level, a service requirement, and the like, transmission tunnels of different quality to transmit user data. The access network device 200 can manage resources of the access network device 200, properly use the resources, provide an access service for the terminal device as required, and be responsible for forwarding a control signal and user data between the terminal device (for example, the terminal device 101 or the terminal device 102) and the core network device 300. Optionally, the access network device 200 may be deployed on land, including an indoor or outdoor device, a handheld device, or a vehicle-mounted device, may be deployed on the water, or may be deployed on an airplane, an uncrewed aerial vehicle, a balloon, or a satellite in the air. An application scenario of the access network device is not limited in embodiments of this application.

For example, the access network device 200 may include but is not limited to: a next generation NodeB (next generation NodeB, gNB) in a 5th generation (5th generation, 5G) communication system, a next generation NodeB in a 6th generation (6th generation, 6G) communication system, a base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (baseband unit, BBU), or a wireless fidelity (wireless fidelity, Wi-Fi) access point (access point, AP).

Optionally, in a network structure, the access network device 200 may further include a centralized unit (centralized unit, CU) or a distributed unit (distributed unit, DU). In this structure, protocol layers of the access network device 200 may be split. Functions of a part of protocol layers are centrally controlled by the CU, functions of a part or all of the remaining protocol layers are distributed in the DU, and the CU centrally controls the DU. For example, functions of a packet data convergence protocol (packet data convergence protocol, PDCP) layer and a higher protocol layer may be disposed on the CU, and functions of protocol layers below the PDCP layer (for example, an RLC layer and a medium access control (medium access control, MAC) layer) are disposed on the DU. It should be noted that such protocol layer division is merely an example, and there may be another division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be separated into different entities for implementation, where the entities are respectively a control-plane CU entity (CU-CP entity) and a user-plane CU entity (CU-UP entity).

In different systems, the CU (or the CU-CP and the CU-UP) or the DU may also have different names, but a person skilled in the art may understand meanings of thereof. For example, in an open radio access network (open radio access network, ORAN) system, the CU may also be referred to as an open CU (open-CU, O-CU), the DU may also be referred to as an open DU (open-DU, O-DU), the CU-CP may also be referred to as an open CU-CP (open-CU-CP, O-CU-CP), and the CU-UP may also be referred to as an O-CU-UP. For ease of description, the CU, the CU-CP, the CU-UP, and the DU are used as examples for description in this application. Any one of the CU (or the CU-CP or the CU-UP) and the DU in this application may be implemented by using a software module, a hardware module, or a combination of a software module and a hardware module.

In this network architecture, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In this network architecture, the CU is classified as a network device on a radio access network (radio access network, RAN) side. In addition, the CU may alternatively be classified as a network device on a core network (core network, CN) side. This is not limited in this application.

For example, an example in which the access network device 200 is a base station and the terminal device is the terminal device 101 is used for description. A plurality of access network devices 200 may be base stations of a same type, or may be base stations of different types. The base station may communicate with the terminal device 101, or may communicate with the terminal device 101 via a relay station. Optionally, the terminal device 101 may communicate with a plurality of access network devices 200 supporting different communication technologies. For example, the terminal device 101 may communicate with a base station that supports an LTE network, or may communicate with a base station that supports a 5G network, or may support dual connectivity to the base station that supports the LTE network and the base station that supports the 5G network.

It may be understood that the access network device and the terminal device may communicate with each other by using a licensed spectrum (licensed spectrum), or may communicate with each other by using an unlicensed spectrum (unlicensed spectrum), or may communicate with each other by using both the licensed spectrum and the unlicensed spectrum. The access network device and the terminal device may communicate with each other by using a spectrum below a 6th generation mobile communication system (6th generation mobile networks or 6th generation wireless systems, 6G), or may communicate with each other by using a spectrum above 6G, or may communicate with each other by using both the spectrum below 6G and the spectrum above 6G. Spectrum resources used between the access network device and the terminal device are not limited in embodiments of this application.

The core network device 300 is responsible for maintaining subscription data of a mobile network, managing a network element of the mobile network, and providing functions such as session management, mobility management, policy management, and security authentication for the terminal device. The core network device provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the internet and forwards the downlink data to the access network device 200, so that the access network device 200 sends the downlink data to the terminal device. Optionally, in terms of function logic, network elements of a core network may be divided into two parts: a user plane network element and a control plane network element. The user plane network element is configured to be responsible for service data transmission. For example, the user plane network element may include but is not limited to a user plane function (user plane function, UPF) network element. The control plane network element is configured to be responsible for management of a mobile network. For example, a control plane may include but is not limited to an access and mobility management function (access and mobility management function, AMF) network element, a session management function (session management function, SMF) network element, a unified data management (unified data management, UDM) network element, a policy control function (policy control function, PCF) network element, an application function (application function, AF) network element, an authentication server function (authentication server function, AUSF) network element, and a network slice selection function (network slice selection function, NSSF) network element. Certainly, the core network may further include other network elements (for example, a network exposure function (network exposure function, NEF) network element, a network repository function (network function repository function, NRF) network element, a unified data repository (unified data repository, UDR) network element, and a network slice-specific authentication and authorization function (network slice-specific authentication and authorization function, NSSAAF) network element). Details are not listed herein one by one.

For example, the control plane of the core network uses a service-oriented architecture, and control plane network elements interact with each other in a service invoking manner to replace a point-to-point communication manner in a conventional architecture. In the service-oriented architecture, a control plane network element exposes a service to another control plane network element, so that the another control plane network element invokes the service. In point-to-point communication, a communication interface between the control plane network elements stores a set of specific messages, and the messages can be used only by the control plane network elements at two ends of the interface during communication.

It should be understood that the communication method provided in embodiments of this application is applicable to downlink signal (or downlink data or downlink information) transmission, or is applicable to uplink signal (or uplink data or uplink information) transmission, or is applicable to device-to-device (device-to-device, D2D) signal transmission. For the downlink signal transmission, a sending device is an access network device, and correspondingly a receiving device is a terminal device. For the uplink signal transmission, a sending device is a terminal device, and correspondingly a receiving device is an access network device. For the D2D signal transmission, a sending device is a terminal device, and correspondingly a receiving device is also a terminal device. A transmission direction of a signal (or data or information) is not limited in embodiments of this application.

Optionally, the communication system shown in FIG. 1 may be various types of communication systems, for example, may be an internet of things (internet of things, IoT) system, a narrowband internet of things (narrowband internet of things, NB-IoT) system, or a long term evolution (long term evolution, LTE) system, or may be a 5th generation mobile communication system (5th generation mobile networks or 5th generation wireless systems, 5G), or may be a hybrid architecture of LTE and 5G, or may be a 5G new radio (new radio, NR) system, or a new communication system emerging in 6G or future communication development. This is not limited in embodiments of this application. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network. In addition, the communication system architecture shown in FIG. 1 is intended to describe the technical solutions in embodiments of this application more clearly, and does not constitute a limitation on the technical solutions provided in embodiments of this application. A person of ordinary skill in the art may know that, with evolution of the communication system architecture and emergence of new service scenarios, the technical solutions provided in embodiments of this application are also applicable to similar technical problems.

For example, the communication system shown in FIG. 1 is the 5G mobile communication system. The 5G mobile communication system is designed and developed for mobile phones and vertical use scenarios. In addition to delay, reliability, and feasibility, energy efficiency is also critical to UE. Currently, UE may need to be charged weekly or daily, which specifically depends on usage time of a user. Generally, a 5G device consumes tens of milliwatts in a radio resource control (radio resource control, RRC) idle (idle)/RRC inactive (inactive) state, and consumes hundreds of milliwatts in an RRC connected (connected) state. A design of prolonging a battery life is a necessary condition for improving energy efficiency and better user experience.

For UEs without continuous energy such as UEs using small rechargeable batteries and single-coin batteries, energy efficiency is more critical. In vertical use scenarios, for example, where sensors and actuators are widely deployed for monitoring, measurement, charging, and the like, batteries of the sensors and the actuators are generally not rechargeable and are expected to be used for at least a few years. In some internet of things scenarios, for example, where wearable devices include smart watches, smart rings, electronic health-related devices, and medical monitoring devices, it is challenging to maintain a battery life of one to two weeks while maintaining performance under a typical battery capacity.

Power consumption depends on a length of a configured wake-up period. For example, in the RRC idle state, the power consumption depends on a configured paging period (for example, a discontinuous reception (discontinuous reception, DRX) period or an extended discontinuous reception (extended discontinuous reception, eDRX) period). A longer configured paging period indicates that user equipment can enter a sleep state for a longer time, to achieve energy saving effect. To meet a battery life requirement, the UE may be woken up periodically once in each eDRX period, where a value of the eDRX period is large. However, when the eDRX period is used to achieve high energy efficiency, a high delay is caused. Therefore, the eDRX period is not suitable for services that require both a long battery life and a low delay. For example, in fire detection and fire extinguishing cases, a fire shutter needs to be closed within 1 to 2 seconds after a sensor detects a fire, and a fire sprinkler is opened by an actuator. However, a long eDRX period cannot meet a delay requirement, so the eDRX period is clearly not suitable for a scenario with a high requirement for delay. Therefore, at a current stage, the UE is woken up periodically once in each DRX period. When the UE is in a woken-up state but no signaling or data service is transmitted in a woken-up period, the UE is in an invalid woken-up state. Power consumption in this period of time dominates overall power consumption of the UE. If the UE is woken up only when signaling or a data service needs to be transmitted, for example, when the UE receives its own paging message, power consumption of the UE can be greatly reduced. Therefore, implementing energy saving of the UE is also an important means to further improve user experience.

A higher energy saving gain can be achieved by using a wake up signal to trigger a main receiver (main receiver, MR) and a separate receiver (for example, a low-power wake-up receiver (low power wake up receiver, LP-WUR)) that has a capability of monitoring a wake up signal with ultra-low power consumption. In a mobile communication network, when signal quality of a serving cell of a UE deteriorates to a specific extent, the serving cell of the UE is changed through handover or cell selection/reselection, to ensure service continuity of the UE. Before the serving cell of the UE is changed through handover or cell selection/reselection, the UE usually needs to stop receiving a signal and data of the serving cell of the UE in a specified time period, and receive a signal of a to-be-measured cell for measurement. The time period is referred to as a measurement gap, a measurement gap (measurement gap), or a measurement gap. In other words, in the measurement gap, the UE adjusts a receiver of the UE to a frequency of the to-be-measured cell for measurement, and then switches to a frequency of the current cell when the measurement gap ends. For example, the measurement gap may be aperiodic duration, or may be a plurality of time periods that are periodically distributed.

However, for UE with a high requirement for data transmission delay or a service with a high requirement for transmission delay, when a time domain resource position corresponding to a measurement gap overlaps with a time domain resource position corresponding to data transmission (or service transmission), because a time period of the measurement gap is used for inter-frequency measurement, a receiver cannot perform data transmission (or service transmission). As a result, the data transmission (or the service transmission) is interrupted, and user experience is affected.

In view of this, embodiments of this application provide a communication method, to complete data transmission (or service transmission) within a transmission delay requirement, and dynamically indicate a receiver that performs inter-frequency measurement, thereby improving user experience.

The following describes in detail a specific implementation of the communication method in embodiments of this application with reference to the accompanying drawings based on the communication system architecture shown in FIG. 1.

FIG. 2 illustrates a procedure of a communication method according to an embodiment of this application. The method is applicable to the communication system architecture shown in FIG. 1. The procedure of the method may be implemented by exchanging data between a plurality of communication apparatuses (for example, a first communication apparatus and a second communication apparatus). Optionally, the first communication apparatus may be a terminal device or a module (for example, a processor, a chip, a chip system, or a circuit) of a terminal device, or may be a logical node, a logical module, or software that can implement all or a part of functions of the terminal. The second communication apparatus may be a network device or a module (for example, a processor, a chip, a chip system, or a circuit) of a network device, or may be a logical node, a logical module, or software that can implement all or a part of functions of the network device. For example, the terminal device may be the terminal device 101 or the terminal device 102 shown in FIG. 1, and the network device may be the access network device 200 shown in FIG. 1. To facilitate description of the technical solutions provided in embodiments of this application, the following describes, by using an example in which the first communication apparatus is a terminal device and the second communication apparatus is a network device, a procedure in which the first communication apparatus and the second communication apparatus exchange data to implement the communication method. As shown in FIG. 2, the method includes the following steps.

Step 201: The network device sends first indication information. Correspondingly, the terminal device receives the first indication information from the network device.

Step 202: The terminal device performs inter-frequency measurement based on the first indication information.

Optionally, in this embodiment of this application, if the terminal device is replaced with a functional module like a chip system, the functional module may not sense a device from which the received information is received. If the network device is replaced with a functional module like a chip system, the functional module may not sense a device to which the sent information is sent.

Optionally, if the network device is of a distributed architecture, for example, the network device includes a CU and/or a DU, or includes one or more of a CU-CP, a CU-UP, or a DU, when the network device includes a DU, that the network device sends the first indication information may be specifically that the DU included in the network device sends the first indication information. Optionally, the network device including the DU may further include a CU. Alternatively, the network device including the DU may further include a CU-CP and/or a CU-UP.

For example, the first indication information may be downlink control information (downlink control information, DCI), or may be indication information carried in the DCI, or may be understood as an indication parameter in some scenarios.

The following describes indicated content of the first indication information in the following several possible implementations.

Implementation 1: The first indication information may indicate whether inter-frequency measurement of the terminal device is allowed to be performed by a low-power wake-up receiver, or the first indication information may indicate whether inter-frequency measurement of the terminal device is allowed to be performed by a main receiver.

The following describes an indication of the first indication information in Implementation 1 by using the following several possible examples.

Example 1: Whether the inter-frequency measurement of the terminal device is allowed to be performed by the low-power wake-up receiver or whether the inter-frequency measurement of the terminal device is allowed to be performed by the main receiver may be indicated by a corresponding change (for example, a content change, a format change, a length change, or a field change) of the first indication information.

For example, the corresponding change of the first indication information is the length change. When a length of the first indication information is a first length, the first indication information may indicate that the inter-frequency measurement of the terminal device is allowed to be performed by the low-power wake-up receiver, or the first indication information may indicate that the inter-frequency measurement of the terminal device is not allowed to be performed by the main receiver.

When the length of the first indication information is a second length, the first indication information may indicate that the inter-frequency measurement of the terminal device is not allowed to be performed by the low-power wake-up receiver, or the first indication information may indicate that the inter-frequency measurement of the terminal device is allowed to be performed by the main receiver.

Example 2: Whether the inter-frequency measurement of the terminal device is allowed to be performed by the low-power wake-up receiver or whether the inter-frequency measurement of the terminal device is allowed to be performed by the main receiver may be indicated by a parameter (for example, a parameter s) carried in the first indication information. For example, the parameter s may be used to implement corresponding indicated content by using (or occupying) 1 bit.

For example, when a parameter value (or may be understood as a bit value) of the parameter s carried in the first indication information is s1 (for example, 1), the first indication information may indicate that the inter-frequency measurement of the terminal device is allowed to be performed by the low-power wake-up receiver, or the first indication information may indicate that the inter-frequency measurement of the terminal device is not allowed to be performed by the main receiver. When the parameter value of the parameter s carried in the first indication information is s2 (for example, 0), the first indication information may indicate that the inter-frequency measurement of the terminal device is not allowed to be performed by the low-power wake-up receiver, or the first indication information may indicate that the inter-frequency measurement of the terminal device is allowed to be performed by the main receiver.

Example 3: Whether the inter-frequency measurement of the terminal device is allowed to be performed by the low-power wake-up receiver or whether the inter-frequency measurement of the terminal device is allowed to be performed by the main receiver may be indicated by a parameter type (for example, a parameter 1 or a parameter 2) carried in the first indication information.

For example, when the parameter type carried in the first indication information is the parameter 1, the first indication information may indicate that the inter-frequency measurement of the terminal device is allowed to be performed by the low-power wake-up receiver, or the first indication information may indicate that the inter-frequency measurement of the terminal device is not allowed to be performed by the main receiver. When the parameter type carried in the first indication information is the parameter 2, the first indication information may indicate that the inter-frequency measurement of the terminal device is not allowed to be performed by the low-power wake-up receiver, or the first indication information may indicate that the inter-frequency measurement of the terminal device is allowed to be performed by the main receiver.

Example 4: Whether the inter-frequency measurement of the terminal device is allowed to be performed by the low-power wake-up receiver or whether the inter-frequency measurement of the terminal device is allowed to be performed by the main receiver may be indicated by whether a parameter appears in the first indication information.

For example, the parameter is a first parameter. When the first indication information carries (or includes or contains) the first parameter, the first indication information may indicate that the inter-frequency measurement of the terminal device is allowed to be performed by the main receiver, or the first indication information may indicate that the inter-frequency measurement of the terminal device is not allowed to be performed by the low-power wake-up receiver. It should be understood that, when the first parameter appears, the first parameter may be understood as the first indication information. When the first indication information does not carry (or include or contain) the first parameter, the first indication information may indicate that the inter-frequency measurement of the terminal device is not allowed to be performed by the main receiver, or the first indication information may indicate that the inter-frequency measurement of the terminal device is allowed to be performed by the low-power wake-up receiver.

Example 5: A receiver that is allowed to perform the inter-frequency measurement of the terminal device (for example, whether the inter-frequency measurement of the terminal device is allowed to be performed by the low-power wake-up receiver or the main receiver) may be indicated by a parameter (for example, a first parameter). The first parameter is included in the first indication information. For example, the first parameter may be used to implement corresponding indicated content by using 1 bit.

For example, when a parameter value (or may be understood as a bit value) of the first parameter is a first value (for example, 1), the first parameter indicates that the inter-frequency measurement of the terminal device is allowed to be performed by the low-power wake-up receiver, or indicates that the inter-frequency measurement of the terminal device is not allowed to be performed by the main receiver. When the parameter value of the first parameter is a second value (for example, 0), the first parameter indicates that the inter-frequency measurement of the terminal device is performed by the main receiver, or indicates that the inter-frequency measurement of the terminal device is not allowed to be performed by the low-power wake-up receiver.

Example 6: A receiver that is allowed to perform the inter-frequency measurement of the terminal device (for example, whether the inter-frequency measurement of the terminal device is allowed to be performed by the low-power wake-up receiver or the main receiver) may be indicated by whether a parameter (for example, a first parameter) appears.

For example, the parameter is the first parameter. When the first indication information carries the first parameter, the first indication information indicates that the inter-frequency measurement of the terminal device is allowed to be performed by the main receiver, or indicates that the inter-frequency measurement of the terminal device is not allowed to be performed by the low-power wake-up receiver. When the first indication information does not carry the first parameter, the first indication information indicates that the inter-frequency measurement of the terminal device is allowed to be performed by the low-power wake-up receiver, or indicates that the inter-frequency measurement of the terminal device is not allowed to be performed by the main receiver.

Based on the content provided in Example 1 to Example 6, when the first indication information indicates that the inter-frequency measurement of the terminal device is performed by the low-power wake-up receiver, the network device may broadcast (or send) a signal adapted to the low-power wake-up receiver, so that the terminal device performs inter-frequency measurement by receiving the signal via the low-power wake-up receiver. For example, the signal adapted to the low-power wake-up receiver may be periodically broadcast.

When the first indication information indicates that the inter-frequency measurement of the terminal device is allowed to be performed by the main receiver or the first indication information indicates that the inter-frequency measurement of the terminal device is not allowed to be performed by the low-power wake-up receiver, the network device may broadcast a synchronization signal block (Synchronization Signal Block, SSB), so that the terminal device performs inter-frequency measurement by receiving the SSB via the main receiver.

It may be understood that, when the first indication information indicates that the inter-frequency measurement of the terminal device is allowed to be performed by the main receiver or the first indication information indicates that the inter-frequency measurement of the terminal device is not allowed to be performed by the low-power wake-up receiver, because the main receiver consumes high power, whether inter-frequency measurement period relaxation can be performed further needs to be considered. If the inter-frequency measurement period relaxation is not performed, the terminal device needs to perform inter-frequency measurement once in each inter-frequency measurement period. If the inter-frequency measurement period relaxation is performed, for example, three times, the terminal device needs to perform inter-frequency measurement once only in every three periods. In other words, for every three periods, the terminal device needs to perform inter-frequency measurement in one period in the three periods, and does not need to perform inter-frequency measurement in other periods in the three periods. In this case, in the other periods in the three periods, the terminal device may enter a sleep state (or a dormant state) at a corresponding measurement gap position. In this way, an effect of saving energy of the terminal device can be achieved. Based on this, the first indication information may further indicate an execution rule for the main receiver to perform the inter-frequency measurement of the terminal device. For example, the execution rule may be any one of the following: The main receiver does not perform inter-frequency measurement period relaxation when performing the inter-frequency measurement of the terminal device, or the main receiver performs inter-frequency measurement period relaxation by m times when performing the inter-frequency measurement of the terminal device. m is any value in {3, 5, 7, 10, 20}.

For example, the following describes, by using the following several possible examples, an indication of the execution rule for the main receiver to perform the inter-frequency measurement of the terminal device.

Example 1: The execution rule for the main receiver to perform the inter-frequency measurement of the terminal device may be indicated by whether a parameter (for example, a second parameter) appears.

For example, the parameter is the second parameter. The second parameter may be used to implement corresponding indicated content by using 1 bit, or may be used to implement corresponding indicated content by using 2 bits. This is not limited in embodiments of this application. It should be understood that, in some cases, the second parameter may be a first parameter. In addition, it may be understood that, in some cases, the second parameter may also be understood as the first indication information.

In an example, the second parameter is used to implement the corresponding indicated content by using the 1 bit. When the second parameter appears, there are two different parameter values (or may be understood as bit values, for example, 0 and 1) indicating different indicated content. For example, when the parameter value of the second parameter is 0, the parameter value 0 may represent that the inter-frequency measurement of the terminal device is performed by the main receiver, and represent that the main receiver does not perform inter-frequency measurement period relaxation when performing the inter-frequency measurement of the terminal device. When the parameter value of the second parameter is 1, the parameter value 1 may represent that the inter-frequency measurement of the terminal device is performed by the main receiver, and may represent that the main receiver performs inter-frequency measurement period relaxation by m times, for example, three times when performing the inter-frequency measurement.

In another example, the second parameter is used to implement the corresponding indicated content by using the 2 bits. When the second parameter appears, there are four different parameter values (for example, 00, 01, 10, and 11) indicating different indicated content. One parameter value represents that the inter-frequency measurement of the terminal device is performed by the low-power wake-up receiver, and the other three different parameter values indicate that the inter-frequency measurement of the terminal device is performed by the main receiver, and correspond to different relaxation times. For example, when the parameter value of the second parameter is 00, the parameter value 00 may represent that the inter-frequency measurement of the terminal device is performed by the low-power wake-up receiver. When the parameter value of the second parameter is 01, the parameter value 01 may represent that the inter-frequency measurement of the terminal device is performed by the main receiver, and represent that the main receiver does not perform inter-frequency measurement period relaxation when performing the inter-frequency measurement of the terminal device. When the parameter value of the second parameter is 10, the parameter value 10 may represent that the inter-frequency measurement of the terminal device is performed by the main receiver, and represent that the main receiver performs inter-frequency measurement period relaxation by x times, for example, three times when performing the inter-frequency measurement of the terminal device. When the parameter value of the second parameter is 11, the parameter value 11 may represent that the inter-frequency measurement of the terminal device is performed by the main receiver, and represent that the main receiver performs inter-frequency measurement period relaxation by y times, for example, five times when performing the inter-frequency measurement of the terminal device. x and y each are a value in {3, 5, 7, 10, 20}.

Example 2: The execution rule for the main receiver to perform the inter-frequency measurement of the terminal device may be indicated by a parameter (for example, a third parameter) carried in the first indication information.

For example, the parameter is the third parameter. The third parameter may be used to implement corresponding indicated content by using 1 bit, and the third parameter is included in the first indication information. It should be understood that, in some cases, the third parameter may alternatively be a first parameter.

For example, the parameter is the third parameter. When a parameter value of the third parameter carried in the first indication information is a first value, it represents that the inter-frequency measurement of the terminal device is performed by the main receiver, and the main receiver performs inter-frequency measurement period relaxation by x times, for example, three times when performing the inter-frequency measurement. When the parameter value of the third parameter carried in the first indication information is a second value, it represents that the inter-frequency measurement of the terminal device is performed by the main receiver, and the main receiver performs inter-frequency measurement period relaxation by y times, for example, three times when performing the inter-frequency measurement. When the parameter value of the third parameter carried in the first indication information is a third value, it represents that the inter-frequency measurement of the terminal device is performed by the main receiver, and the main receiver performs inter-frequency measurement period relaxation by z times, for example, seven times when performing the inter-frequency measurement. x, y, and z each are a value in {3, 5, 7, 10, 20}.

Example 3: The execution rule for the main receiver to perform the inter-frequency measurement of the terminal device may be indicated by a parameter (for example, a fourth parameter) carried in the first indication information.

For example, the parameter is the fourth parameter. The fourth parameter may be used to implement corresponding indicated content by using 2 bits, or may be used to implement corresponding indicated content by using 3 bits. This is not limited in embodiments of this application. It should be understood that, in some cases, the fourth parameter may alternatively be a first parameter.

For example, the fourth parameter is used to implement the corresponding indicated content by using the 2 bits. Different parameter values (for example, 00, 01, 10, and 11) corresponding to the fourth parameter represent different indicated content. One parameter value represents that the inter-frequency measurement of the terminal device is performed by the low-power wake-up receiver, and the other three different parameter values indicate that the inter-frequency measurement of the terminal device is performed by the main receiver, and correspond to different relaxation times. For example, when the parameter value of the fourth parameter is 00, the parameter value 00 may represent that the inter-frequency measurement of the terminal device is performed by the low-power wake-up receiver. When the parameter value of the fourth parameter is 01, the parameter value 01 may represent that the inter-frequency measurement of the terminal device is performed by the main receiver, and represent that the main receiver does not perform inter-frequency measurement period relaxation when performing the inter-frequency measurement of the terminal device. When the parameter value of the fourth parameter is 10, the parameter value 10 may represent that the inter-frequency measurement of the terminal device is performed by the main receiver, and represent that the main receiver performs inter-frequency measurement period relaxation by x times, for example, three times when performing the inter-frequency measurement of the terminal device. When the parameter value of the fourth parameter is 11, the parameter value 11 may represent that the inter-frequency measurement of the terminal device is performed by the main receiver, and represent that the main receiver performs inter-frequency measurement period relaxation by y times, for example, five times when performing the inter-frequency measurement of the terminal device. x and y each are a value in {3, 5, 7, 10, 20}.

In this embodiment of this application, when the first indication information indicates whether the inter-frequency measurement of the terminal device is allowed to be performed by the low-power wake-up receiver, or indicates whether the inter-frequency measurement of the terminal device is allowed to be performed by the main receiver, the first indication information may further indicate whether a measurement gap corresponding to the inter-frequency measurement of the terminal device takes effect.

Optionally, when the first indication information indicates whether the inter-frequency measurement of the terminal device is allowed to be performed by the low-power wake-up receiver, or indicates whether the inter-frequency measurement of the terminal device is allowed to be performed by the main receiver, whether a measurement gap corresponding to the inter-frequency measurement of the terminal device takes effect may be further implemented by using second indication information. For example, the network device may send the second indication information to the terminal device, to indicate whether the measurement gap corresponding to the inter-frequency measurement of the terminal device takes effect.

In a possible implementation, when the first indication information indicates that the inter-frequency measurement of the terminal device is performed by the low-power wake-up receiver, or indicates that the inter-frequency measurement of the terminal device is not performed by the main receiver, the first indication information may further indicate that the measurement gap corresponding to the inter-frequency measurement of the terminal device does not take effect.

In another possible implementation, when the first indication information indicates that the inter-frequency measurement of the terminal device is not performed by the low-power wake-up receiver, or indicates that the inter-frequency measurement of the terminal device is performed by the main receiver, the first indication information may not indicate whether the measurement gap corresponding to the inter-frequency measurement of the terminal device takes effect, or may indicate that the measurement gap corresponding to the inter-frequency measurement of the terminal device takes effect, or may indicate that the measurement gap corresponding to the inter-frequency measurement of the terminal device maintains a current state (for example, a state that has been configured and taken effect, or a state that has been configured but not taken effect, or a state that has not been configured).

In an example, whether the measurement gap corresponding to the inter-frequency measurement of the terminal device takes effect may be indicated by carrying a parameter (for example, a parameter a) in the first indication information.

For example, the parameter carried in the first indication information is the parameter a. When a parameter value of the parameter a carried in the first indication information is a1 (for example, 1), the first indication information may further indicate that the measurement gap corresponding to the inter-frequency measurement of the terminal device does not take effect. For example, when the first indication information indicates that the inter-frequency measurement of the terminal device is not performed by the main receiver, or indicates that the inter-frequency measurement of the terminal device is performed by the low-power wake-up receiver, if the parameter value of the parameter a carried in the first indication information is a1, it represents that the measurement gap does not take effect, and the main receiver of the terminal device does not perform the inter-frequency measurement. In this case, the inter-frequency measurement of the terminal device is performed by the low-power wake-up receiver.

When the parameter value of the parameter a carried in the first indication information is a2 (for example, 0), the first indication information may further indicate that the measurement gap corresponding to the inter-frequency measurement of the terminal device takes effect, or may indicate that the measurement gap corresponding to the inter-frequency measurement of the terminal device maintains a current state (for example, a state that has been configured and taken effect, a state that has been configured but not taken effect, or a state that has not been configured). Optionally, when the first indication information does not carry the parameter a, it is considered by default (or represented or indicated) that the first indication information does not indicate whether the measurement gap corresponding to the inter-frequency measurement of the terminal device takes effect. It may be understood as that the network device does not indicate whether the measurement gap corresponding to the inter-frequency measurement of the terminal device takes effect. For example, when the first indication information indicates that the inter-frequency measurement of the terminal device is performed by the main receiver, or indicates that the inter-frequency measurement of the terminal device is not performed by the low-power wake-up receiver, if the first indication information does not carry the parameter a, the terminal device may perform the inter-frequency measurement via the main receiver.

In another example, whether the measurement gap corresponding to the inter-frequency measurement of the terminal device takes effect may be indicated by a parameter type (for example, a parameter a or a parameter b) carried in the first indication information.

For example, the parameter type carried in the first indication information is the parameter a or the parameter b. When the parameter type carried in the first indication information is the parameter a, the first indication information may further indicate that the measurement gap corresponding to the inter-frequency measurement of the terminal device does not take effect. For example, when the first indication information indicates that the inter-frequency measurement of the terminal device is not performed by the main receiver, or indicates that the inter-frequency measurement of the terminal device is performed by the low-power wake-up receiver, if the parameter type carried in the first indication information is the parameter a, it represents that the measurement gap does not take effect, and the main receiver of the terminal device does not perform the inter-frequency measurement. In this case, the inter-frequency measurement of the terminal device is performed by the low-power wake-up receiver.

When the parameter type carried in the first indication information is the parameter b, it is considered by default that the first indication information does not indicate whether the measurement gap corresponding to the inter-frequency measurement of the terminal device takes effect, or the first indication information may indicate that the measurement gap corresponding to the inter-frequency measurement of the terminal device takes effect, or may indicate that the measurement gap corresponding to the inter-frequency measurement of the terminal device maintains a current state. For example, when the first indication information indicates that the inter-frequency measurement of the terminal device is performed by the main receiver, or indicates that the inter-frequency measurement of the terminal device is not performed by the low-power wake-up receiver, if the parameter type of the first indication information is the parameter b, the terminal device may perform the inter-frequency measurement via the main receiver.

In still another example, whether the measurement gap corresponding to the inter-frequency measurement of the terminal device takes effect may be indicated by whether a parameter (for example, a parameter a) appears in the first indication information.

For example, a parameter is the parameter a. In an example, when the first indication information carries the parameter a, the first indication information may further indicate that the measurement gap corresponding to the inter-frequency measurement of the terminal device does not take effect. It should be understood that, when the parameter a appears, the parameter a may be understood as the first indication information. For example, when the first indication information indicates that the inter-frequency measurement of the terminal device is not performed by the main receiver, or indicates that the inter-frequency measurement of the terminal device is performed by the low-power wake-up receiver, if the first indication information carries the parameter a, it represents that the measurement gap does not take effect, and the main receiver of the terminal device does not perform the inter-frequency measurement. In this case, the inter-frequency measurement of the terminal device is performed by the low-power wake-up receiver.

When the first indication information does not carry the parameter a, the first indication information may further indicate that the measurement gap corresponding to the inter-frequency measurement of the terminal device takes effect, or may indicate that the measurement gap corresponding to the inter-frequency measurement of the terminal device maintains a current state. For example, when the first indication information indicates that the inter-frequency measurement of the terminal device is performed by the main receiver, or indicates that the inter-frequency measurement of the terminal device is not performed by the low-power wake-up receiver, if the first indication information carries the parameter a, the terminal device may perform the inter-frequency measurement via the main receiver.

In still another possible implementation, when the first indication information indicates that the inter-frequency measurement of the terminal device is performed by the low-power wake-up receiver, or indicates that the inter-frequency measurement of the terminal device is not performed by the main receiver, the network device may further send, to the terminal device, second indication information indicating that a measurement gap corresponding to the inter-frequency measurement of the terminal device does not take effect. For example, the second indication information may be DCI, or may be indication information carried in the DCI, or may be understood as an indication parameter in some scenarios.

In still another possible implementation, when the first indication information indicates that the inter-frequency measurement of the terminal device is not performed by the low-power wake-up receiver, or indicates that the inter-frequency measurement of the terminal device is performed by the main receiver, the second indication information sent by the network device to the terminal device may not indicate whether the measurement gap corresponding to the inter-frequency measurement of the terminal device takes effect, or may indicate that the measurement gap corresponding to the inter-frequency measurement of the terminal device takes effect, or may indicate that the measurement gap corresponding to the inter-frequency measurement of the terminal device maintains a current state (for example, a state that has been configured and taken effect, a state that has been configured but not taken effect, or a state that has not been configured).

In an example, whether the measurement gap corresponding to the inter-frequency measurement of the terminal device takes effect may be indicated by carrying a parameter (for example, a parameter c) in the second indication information. For example, the parameter c may be used to implement corresponding indicated content by using 1 bit.

For example, the parameter carried in the second indication information is the parameter c. When a parameter value of the parameter c carried in the second indication information is c1 (for example, 1), the second indication information may indicate that the measurement gap corresponding to the inter-frequency measurement of the terminal device does not take effect. For example, when the first indication information indicates that the inter-frequency measurement of the terminal device is not performed by the main receiver, or indicates that the inter-frequency measurement of the terminal device is performed by the low-power wake-up receiver, if the parameter value of the parameter c carried in the first indication information is c1, it represents that the measurement gap does not take effect, and the main receiver of the terminal device does not perform the inter-frequency measurement. In this case, the inter-frequency measurement of the terminal device is performed by the low-power wake-up receiver.

When the parameter value of the parameter c carried in the second indication information is c2 (for example, 0), the second indication information may indicate that the measurement gap corresponding to the inter-frequency measurement of the terminal device takes effect, or may indicate that the measurement gap corresponding to the inter-frequency measurement of the terminal device maintains a current state. Optionally, when the second indication information does not carry the parameter c, it is considered by default that the second indication information does not indicate whether the measurement gap corresponding to the inter-frequency measurement of the terminal device takes effect. It may be understood as that the network device does not indicate whether the measurement gap corresponding to the inter-frequency measurement of the terminal device takes effect. For example, when the first indication information indicates that the inter-frequency measurement of the terminal device is performed by the main receiver, or indicates that the inter-frequency measurement of the terminal device is not performed by the low-power wake-up receiver, if the second indication information does not carry the parameter c or the parameter value of the carried parameter c is c2, the terminal device may perform the inter-frequency measurement via the main receiver.

In another example, whether the measurement gap corresponding to the inter-frequency measurement of the terminal device takes effect may be indicated by a parameter type (for example, a parameter c or a parameter d) carried in the second indication information.

For example, the parameter type carried in the second indication information is the parameter c or the parameter d. When the parameter type carried in the second indication information is the parameter c, the second indication information may indicate that the measurement gap corresponding to the inter-frequency measurement of the terminal device does not take effect. For example, when the first indication information indicates that the inter-frequency measurement of the terminal device is not performed by the main receiver, or indicates that the inter-frequency measurement of the terminal device is performed by the low-power wake-up receiver, if the parameter type carried in the second indication information is the parameter c, it represents that the measurement gap does not take effect, and the main receiver of the terminal device does not perform the inter-frequency measurement. In this case, the inter-frequency measurement of the terminal device is performed by the low-power wake-up receiver.

When the parameter type carried in the second indication information is the parameter d, it is considered by default that the second indication information does not indicate whether the measurement gap corresponding to the inter-frequency measurement of the terminal device takes effect, or the second indication information may indicate that the measurement gap corresponding to the inter-frequency measurement of the terminal device takes effect, or the second indication information may indicate that the measurement gap corresponding to the inter-frequency measurement of the terminal device maintains a current state. For example, when the first indication information indicates that the inter-frequency measurement of the terminal device is performed by the main receiver, or indicates that the inter-frequency measurement of the terminal device is not performed by the low-power wake-up receiver, if the parameter type of the second indication information is the parameter d, the terminal device may perform the inter-frequency measurement via the main receiver.

In still another example, whether the measurement gap corresponding to the inter-frequency measurement of the terminal device takes effect may be indicated by whether a parameter (for example, a parameter c) appears in the second indication information.

For example, the parameter is the parameter c. In an example, when the second indication information carries the parameter c, the second indication information may indicate that the measurement gap corresponding to the inter-frequency measurement of the terminal device does not take effect. It should be understood that, when the parameter c appears, the parameter c may be understood as the second indication information. For example, when the first indication information indicates that the inter-frequency measurement of the terminal device is not performed by the main receiver, or indicates that the inter-frequency measurement of the terminal device is performed by the low-power wake-up receiver, if the second indication information carries the parameter c, it represents that the measurement gap does not take effect, and the main receiver of the terminal device does not perform the inter-frequency measurement. In this case, the inter-frequency measurement of the terminal device is performed by the low-power wake-up receiver.

When the second indication information does not carry the parameter c, the second indication information may indicate that the measurement gap corresponding to the inter-frequency measurement of the terminal device takes effect, or may indicate that the measurement gap corresponding to the inter-frequency measurement of the terminal device maintains a current state. For example, when the first indication information indicates that the inter-frequency measurement of the terminal device is performed by the main receiver, or indicates that the inter-frequency measurement of the terminal device is not performed by the low-power wake-up receiver, if the first indication information does not carry the parameter c, the terminal device may perform the inter-frequency measurement via the main receiver.

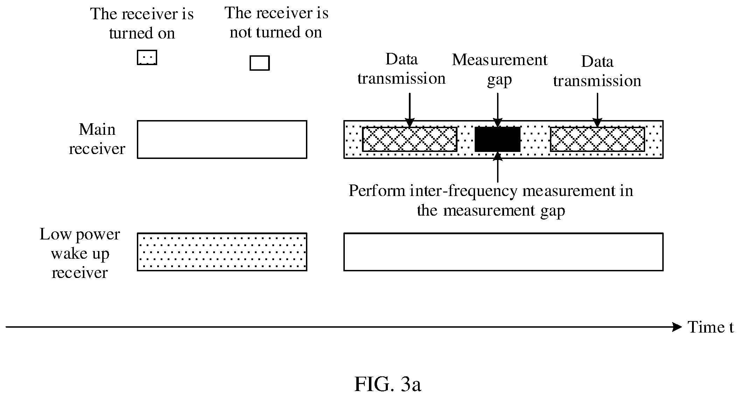

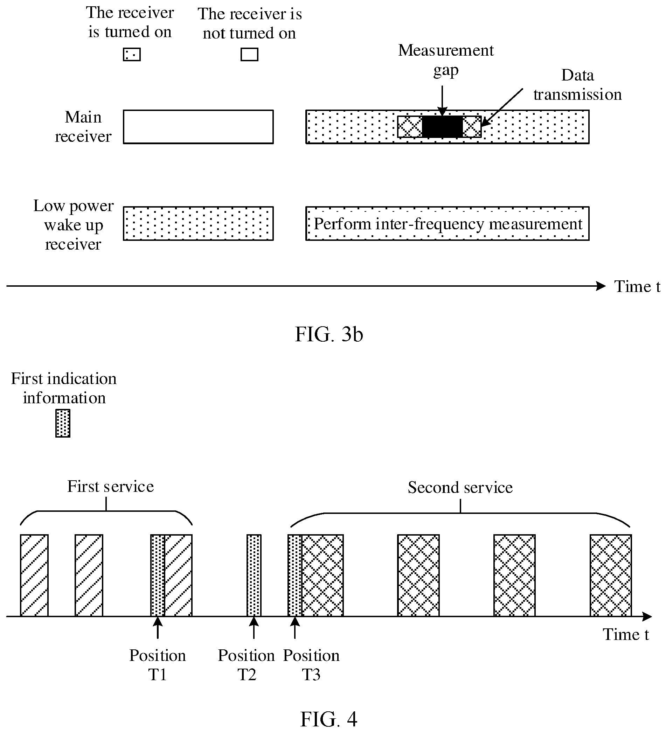

For example, with reference to FIG. 3a and FIG. 3b, the following describes a case in which whether the measurement gap corresponding to the inter-frequency measurement of the terminal device takes effect.

FIG. 3a is a diagram in which a time domain resource of data transmission (or service transmission) does not overlap with that of a measurement gap according to an embodiment of this application. As shown in FIG. 3a, when the time domain resource of the data transmission (or the service transmission) does not overlap with that of the measurement gap (which may be understood as that a time domain resource position corresponding to the data transmission (or the service transmission) does not overlap with a time domain resource position corresponding to the measurement gap), whether a measurement gap used for inter-frequency measurement is configured does not affect the data transmission (or the service transmission). Therefore, a larger data transmission delay is not caused. In this case, the measurement gap maintains a current effective/ineffective state. For example, if the measurement gap has been configured and has taken effect, a state in which the measurement gap has taken effect is not changed; if the measurement gap is not configured, a state in which the measurement gap is not configured is maintained; or if the measurement gap has been configured but has not taken effect, a state in which the measurement gap has been configured but has not taken effect is maintained.

For example, when the first indication information indicates that the inter-frequency measurement of the terminal device is not allowed to be performed by the low-power wake-up receiver, or indicates that the inter-frequency measurement of the terminal device is allowed to be performed by the main receiver, whether the measurement gap corresponding to the inter-frequency measurement of the terminal device takes effect does not affect data transmission (or service transmission). Therefore, the first indication information may not need to indicate whether the measurement gap corresponding to the inter-frequency measurement of the terminal device takes effect, or the second indication information may indicate that the measurement gap corresponding to the inter-frequency measurement of the terminal device maintains a current state.

In an example, after receiving a low-power wake-up signal (low power wake up signal, LP-WUS), the low-power wake-up receiver parses the LP-WUS to obtain an identifier of the terminal device (for example, a UE-ID). When the identifier of the terminal device is an identifier of the terminal device in which the low-power wake-up receiver is located, the low-power wake-up receiver may send indication information to the main receiver, where the indication information is used to wake up the main receiver. After being woken up, the main receiver can perform data transmission (or service transmission). Then, in a process in which the main receiver performs data transmission (or service transmission), if the inter-frequency measurement needs to be performed on the terminal device, because the first indication information received by the terminal device from the network device indicates that the inter-frequency measurement of the terminal device is performed by the main receiver, the terminal device may perform the inter-frequency measurement via the main receiver.

In another example, the low-power wake-up receiver may periodically perform intra-frequency measurement of the terminal device. For example, in a period, after performing the intra-frequency measurement on the terminal device, the low-power wake-up receiver obtains an intra-frequency measurement result (for example, signal quality of a serving cell in which the terminal device is located), and may compare the intra-frequency measurement result with a preset threshold. When the intra-frequency measurement result is less than the preset threshold, if the first indication information indicates that the inter-frequency measurement of the terminal device is performed by the main receiver, the low-power wake-up receiver may send indication information to the main receiver, where the indication information is used to wake up the main receiver. After being woken up, the main receiver can perform the inter-frequency measurement.

FIG. 3b is a diagram in which a time domain resource of data transmission (or service transmission) overlaps with that of a measurement gap according to an embodiment of this application. As shown in FIG. 3b, when the time domain resource of the data transmission (or the service transmission) overlaps with that of the measurement gap (which may be understood as that a time domain resource position corresponding to data transmission (or the service transmission) overlaps with a time domain resource position corresponding to the measurement gap), whether a measurement gap used for inter-frequency measurement is configured has different impact on the data transmission (or the service transmission). For example, if the measurement gap has been configured and has taken effect, because the main receiver uses a time period of the measurement gap to perform the inter-frequency measurement, data transmission (or service transmission) performed by the main receiver is interrupted. Therefore, a transmission delay of the data transmission (or the service transmission) is increased, and a network capacity is affected. In view of this, when the measurement gap has been configured and has taken effect or the measurement gap has been configured but has not taken effect, for data (or a service) that has a high requirement for transmission delay, it is indicated that the inter-frequency measurement of the terminal device is performed by the low-power wake-up receiver, and the measurement gap does not take effect.

For example, when the first indication information indicates that the inter-frequency measurement of the terminal device is not performed by the main receiver, or indicates that the inter-frequency measurement of the terminal device is performed by the low-power wake-up receiver, that the measurement gap corresponding to the inter-frequency measurement of the terminal device takes effect affects data transmission (or service transmission). Therefore, the first indication information may further indicate that the measurement gap corresponding to the inter-frequency measurement of the terminal device does not take effect, that is, configuration of the measurement gap is disabled (disabled) (or deactivated).

In an example, after receiving a low-power wake-up signal, the low-power wake-up receiver parses the LP-WUS to obtain an identifier of the terminal device (for example, a UE-ID). When the identifier of the terminal device is an identifier of the terminal device in which the low-power wake-up receiver is located, the low-power wake-up receiver may send indication information to the main receiver, where the indication information is used to wake up the main receiver. After being woken up, the main receiver can perform data transmission (or service transmission). Then, in a process in which the main receiver performs data transmission (or service transmission), if the inter-frequency measurement needs to be performed on the terminal device, because the first indication information received by the terminal device from the network device indicates that the inter-frequency measurement of the terminal device is performed by the low-power wake-up receiver, the terminal device may perform the inter-frequency measurement via the low-power wake-up receiver after configuration of the measurement gap is disabled.

In another example, the low-power wake-up receiver may periodically perform intra-frequency measurement of the terminal device. For example, in a period, after performing the intra-frequency measurement on the terminal device, the low-power wake-up receiver obtains an intra-frequency measurement result (for example, signal quality of a serving cell in which the terminal device is located), and may compare the intra-frequency measurement result with a preset threshold. When the intra-frequency measurement result is less than the preset threshold, if the first indication information indicates that the inter-frequency measurement of the terminal device is performed by the low-power wake-up receiver, the terminal device may perform the inter-frequency measurement via the low-power wake-up receiver.

Implementation 2: The first indication information may indicate whether a measurement gap corresponding to the inter-frequency measurement of the terminal device takes effect. It should be understood that, in this case, the first indication information does not need to indicate whether the inter-frequency measurement of the terminal device is allowed to be performed by a low-power wake-up receiver, or whether the inter-frequency measurement of the terminal device is allowed to be performed by a main receiver.

In a possible implementation, when the first indication information indicates that the measurement gap corresponding to the inter-frequency measurement of the terminal device does not take effect, it is considered by default that the inter-frequency measurement of the terminal device is performed by the low-power wake-up receiver, or it is considered by default that the inter-frequency measurement of the terminal device is not performed by the main receiver.

In another possible implementation, when the first indication information indicates that the measurement gap corresponding to the inter-frequency measurement of the terminal device takes effect, it is considered by default that the inter-frequency measurement of the terminal device is performed by the main receiver, or it is considered by default that the inter-frequency measurement of the terminal device is not performed by the low-power wake-up receiver.

In still another possible implementation, when the first indication information does not indicate whether the measurement gap corresponding to the inter-frequency measurement of the terminal device takes effect (which may be understood as that the first indication information does not indicate a status of the measurement gap corresponding to the terminal device), it is considered by default that the inter-frequency measurement of the terminal device is performed by the main receiver, or it is considered by default that the inter-frequency measurement of the terminal device is not performed by the low-power wake-up receiver.

The following describes, by using the following several possible examples, a case in which whether the measurement gap corresponding to the inter-frequency measurement of the terminal device takes effect in Implementation 2 is indicated.

Example 1: Whether the measurement gap corresponding to the inter-frequency measurement of the terminal device takes effect may be indicated by carrying a parameter (for example, a parameter a) in the first indication information.

For example, the parameter carried in the first indication information is the parameter a. When a parameter value of the parameter a carried in the first indication information is a1 (for example, 1), the first indication information indicates that the measurement gap corresponding to the inter-frequency measurement of the terminal device does not take effect. It should be understood that, when the measurement gap does not take effect, the main receiver of the terminal device does not perform the inter-frequency measurement. In this case, the inter-frequency measurement of the terminal device is performed by the low-power wake-up receiver.

When the parameter value of the parameter a carried in the first indication information is a2 (for example, 0), the first indication information indicates that the measurement gap corresponding to the inter-frequency measurement of the terminal device takes effect, or may indicate that the measurement gap corresponding to the inter-frequency measurement of the terminal device maintains a current state. In this case, it is considered by default that the inter-frequency measurement of the terminal device is performed by the main receiver.

Optionally, when the first indication information does not carry the parameter a, it is considered by default that the first indication information does not indicate whether the measurement gap corresponding to the inter-frequency measurement of the terminal device takes effect. It may be understood as that the network device does not indicate whether the measurement gap corresponding to the inter-frequency measurement of the terminal device takes effect. In this case, it is considered by default that the inter-frequency measurement of the terminal device is performed by the main receiver.

Example 2: Whether the measurement gap corresponding to the inter-frequency measurement of the terminal device takes effect may be indicated by a parameter type (for example, a parameter a or a parameter b) carried in the first indication information.

For example, the parameter type carried in the first indication information is the parameter a or the parameter b. When the parameter type carried in the first indication information is the parameter a, the first indication information indicates that the measurement gap corresponding to the inter-frequency measurement of the terminal device does not take effect. It should be understood that, when the measurement gap does not take effect, the main receiver of the terminal device does not perform the inter-frequency measurement. In this case, the inter-frequency measurement of the terminal device is performed by the low-power wake-up receiver.

When the parameter type carried in the first indication information is the parameter b, it is considered by default that the first indication information does not indicate whether the measurement gap corresponding to the inter-frequency measurement of the terminal device takes effect, or the first indication information may indicate that the measurement gap corresponding to the inter-frequency measurement of the terminal device takes effect, or may indicate that the measurement gap corresponding to the inter-frequency measurement of the terminal device maintains a current state. In this case, it is considered by default that the inter-frequency measurement of the terminal device is performed by the main receiver.

Example 3: Whether the measurement gap corresponding to the inter-frequency measurement of the terminal device takes effect may be indicated by whether a parameter (for example, a parameter a) appears in the first indication information.

For example, the parameter is the parameter a. In an example, when the first indication information carries the parameter a, the first indication information indicates that the measurement gap corresponding to the inter-frequency measurement of the terminal device does not take effect. It should be understood that, when the parameter a appears, the parameter a may be understood as the first indication information. It may be understood that, when the measurement gap does not take effect, the main receiver of the terminal device does not perform the inter-frequency measurement. In this case, the inter-frequency measurement of the terminal device is performed by the low-power wake-up receiver.

When the first indication information does not carry the parameter a, the first indication information indicates that the measurement gap corresponding to the inter-frequency measurement of the terminal device takes effect, or may indicate that the measurement gap corresponding to the inter-frequency measurement of the terminal device maintains a current state. In this case, it is considered by default that the inter-frequency measurement of the terminal device is performed by the main receiver.

Based on the foregoing content, the following describes an implementation process in which the network device determines indicated content of the first indication information in the following several possible implementations.

Manner 1: The network device determines the indicated content of the first indication information based on a value relationship between a delay threshold of a first service and a specified delay threshold.

For example, the specified delay threshold may be predefined, for example, predefined in a protocol, or may be configured by the network device, or may be preconfigured and negotiated by the terminal device and the network device, or may be indicated by indication information (for example, fifth indication information) sent by the network device to the terminal device. This is not limited in embodiments of this application.

In this embodiment of this application, before transmitting the first service (or first data) to the terminal device, the network device may first receive third indication information. The third indication information may include the delay threshold of the first service (or the first data), the third indication information is from a core network, and the first service (or the first data) is a downlink service (or downlink data) received by the terminal device. Then, the network device may compare the delay threshold of the first service with the specified delay threshold. When the delay threshold of the first service is less than or equal to the specified delay threshold, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the delay threshold of the first service is less than or equal to the specified delay threshold, the network device may also determine that the indicated content of second indication information is that the measurement gap corresponding to the inter-frequency measurement of the terminal device does not take effect.

When the delay threshold of the first service is greater than the specified delay threshold, the network device may determine that the indicated content of the first indication information includes at least one of the following: The inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the delay threshold of the first service is greater than the specified delay threshold, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

Optionally, after receiving the third indication information, the network device may also send the third indication information to the terminal device, and the terminal device determines, based on the value relationship between the delay threshold of the first service and the specified delay threshold, whether the inter-frequency measurement of the terminal device is performed by the main receiver or performed by the low-power wake-up receiver, or may further determine whether the measurement gap corresponding to the inter-frequency measurement of the terminal device takes effect. After obtaining the third indication information, the terminal device may compare the delay threshold of the first service with the specified delay threshold. When the delay threshold of the first service is less than or equal to the specified delay threshold, the terminal device may determine at least one of the following: The inter-frequency measurement of the terminal device is performed by the low-power wake-up receiver, or the measurement gap corresponding to the inter-frequency measurement of the terminal device does not take effect. When the delay threshold of the first service is greater than the specified delay threshold, the terminal device may determine at least one of the following: The inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

It should be understood that, after determining whether the inter-frequency measurement of the terminal device is performed by the main receiver or performed by the low-power wake-up receiver, or determining whether the measurement gap corresponding to the inter-frequency measurement of the terminal device takes effect, the terminal device may notify the network device of determined corresponding content (for example, determining that the inter-frequency measurement of the terminal device is performed by the main receiver).

Manner 2: The network device determines the indicated content of the first indication information based on fourth indication information.

For example, the fourth indication information is from the terminal device, and the fourth indication information includes at least one of the following: a power consumption requirement, a coverage requirement, a performance requirement, a delay requirement, a receiver that is expected to perform the inter-frequency measurement, whether an inter-frequency measurement gap is expected to take effect, or that the first indication information is expected to be sent to indicate that the inter-frequency measurement is performed by the low-power wake-up receiver.

In an example, the fourth indication information includes the power consumption requirement. When the power consumption requirement included in the fourth indication information is a low requirement for power consumption, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the power consumption requirement included in the fourth indication information is a low requirement for power consumption, the network device may also determine that the indicated content of the second indication information is that the measurement gap corresponding to the inter-frequency measurement of the terminal device does not take effect.

When the power consumption requirement included in the fourth indication information is a high requirement for power consumption, the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the power consumption requirement included in the fourth indication information is a high requirement for power consumption, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

In another example, the fourth indication information includes the coverage requirement. When the coverage requirement included in the fourth indication information is a high requirement for coverage, the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the coverage requirement included in the fourth indication information is a high requirement for coverage, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

When the coverage requirement included in the fourth indication information is a low requirement for coverage, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the coverage requirement included in the fourth indication information is a low requirement for coverage, the network device may also determine that the indicated content of the second indication information is that the measurement gap corresponding to the inter-frequency measurement of the terminal device does not take effect.

In still another example, the fourth indication information includes the performance requirement. When the performance requirement included in the fourth indication information is a low requirement for performance, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the performance requirement included in the fourth indication information is a low requirement for performance, the network device may also determine that the indicated content of the second indication information is that the measurement gap corresponding to the inter-frequency measurement of the terminal device does not take effect.

When the performance requirement included in the fourth indication information is a high requirement for performance, the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the performance requirement included in the fourth indication information is a high requirement for performance, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

In still another example, the fourth indication information includes the delay requirement. When the delay requirement included in the fourth indication information is a low requirement for delay, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the delay requirement included in the fourth indication information is a low requirement for delay, the network device may also determine that the indicated content of the second indication information is that the measurement gap corresponding to the inter-frequency measurement of the terminal device does not take effect.

When the delay requirement included in the fourth indication information is a high requirement for delay, the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the delay requirement included in the fourth indication information is a high requirement for delay, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

In still another example, the fourth indication information includes the receiver that is expected to perform the inter-frequency measurement. When the fourth indication information includes that the inter-frequency measurement is expected to be performed by the main receiver, the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the fourth indication information includes that the inter-frequency measurement is expected to be performed by the main receiver, the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

When the fourth indication information includes that the inter-frequency measurement is expected to be performed by the low-power wake-up receiver, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the fourth indication information includes that the inter-frequency measurement is expected to be performed by the low-power wake-up receiver, the network device may also determine that the indicated content of the second indication information is that the measurement gap corresponding to the inter-frequency measurement of the terminal device does not take effect.

In still another example, the fourth indication information includes whether the inter-frequency measurement gap is expected to take effect. When the fourth indication information includes that the inter-frequency measurement gap is expected not to take effect, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the fourth indication information includes that the inter-frequency measurement is expected to be performed by the low-power wake-up receiver, the network device may also determine that the indicated content of the second indication information is that the measurement gap corresponding to the inter-frequency measurement of the terminal device does not take effect.

When the fourth indication information includes that the measurement gap corresponding to the inter-frequency measurement of the terminal device maintains a current state (or the inter-frequency measurement gap is expected to take effect), the network device may determine that the indicated content of the first indication information is that the inter-frequency measurement of the terminal device is performed by the main receiver, or the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated). Optionally, when the fourth indication information includes that the measurement gap corresponding to the inter-frequency measurement of the terminal device maintains a current state (or the inter-frequency measurement gap is expected to take effect), the network device may also determine that the indicated content of the second indication information is that the measurement gap corresponding to the inter-frequency measurement of the terminal device maintains a current state (or the measurement gap corresponding to the inter-frequency measurement of the terminal device takes effect or whether the measurement gap corresponding to the inter-frequency measurement of the terminal device takes effect is not indicated).

In still another example, the fourth indication information includes that the first indication information is expected to be sent to indicate that the inter-frequency measurement is performed by the low-power wake-up receiver. When the fourth indication information includes that the first indication information is expected to be sent to indicate that the inter-frequency measurement is performed by the low-power wake-up receiver, the network device may determine that the indicated content of the first indication information is that the inter-frequency measurement of the terminal device is performed by the low-power wake-up receiver and/or the measurement gap corresponding to the inter-frequency measurement of the terminal device does not take effect. Optionally, when the fourth indication information includes that the first indication information is expected to be sent to indicate that the inter-frequency measurement is performed by the low-power wake-up receiver, the network device may also determine that the indicated content of the second indication information is that the measurement gap corresponding to the inter-frequency measurement of the terminal device does not take effect.

It may be understood that any plurality of examples in the plurality of examples in Manner 2 may be used in combination.

It can be learned from step 201 and step 202 that the indicated content of the first indication information may be dynamically adjusted. Therefore, the first indication information may dynamically indicate a specific receiver that performs the inter-frequency measurement of the terminal device. Then, after receiving the first indication information, the terminal device can effectively perform the inter-frequency measurement. This can dynamically indicate the inter-frequency measurement, and can ensure reasonability and accuracy of performing the inter-frequency measurement by the terminal device, thereby improving user experience. For example, when a service with a high requirement for delay service or a service with a low requirement for delay is transmitted, the first indication information may indicate that the inter-frequency measurement of the terminal device is performed by the low-power wake-up receiver, and may indicate that the measurement gap corresponding to the inter-frequency measurement of the terminal device does not take effect. In this way, a short delay of service transmission can be ensured, and service transmission can be completed within a transmission delay requirement, thereby improving user experience and increasing a network capacity.

Based on the technical solution of the communication method shown in FIG. 2, the following describes, by using examples, several scenarios to which the communication method provided in embodiments of this application is applied.

### Scenario 1: Service switching scenario.

FIG. 4 is a diagram of a service switching scenario according to an embodiment of this application. As shown in FIG. 4, in the service switching scenario, switching between two types of services (for example, switching between a first service and a second service) is used as an example. For example, the first service is a service with a low requirement for transmission delay, the second service is a service with a high requirement for transmission delay, and the second service is a periodic service (for example, an extended reality (extended reality, XR) service). For the first service, because the transmission delay requirement of the first service is low, configuration of a measurement gap does not affect service transmission. For the second service, for example, the second service is an XR service, and a period of the XR service is related to a frame rate. For example, when the frame rate is 60 fps, a period of an XR video frame is 16.67 ms. When the frame rate is 30 fps, the period of the XR video frame is 33.33 ms. There is a high probability that a non-integer period collides with a time domain resource of a measurement gap configured based on an integer period, and service transmission is likely to be interrupted, affecting user experience. In view of this, according to the communication solution provided in this embodiment of this application, interruption of the service transmission can be effectively avoided, and user experience can be effectively improved.

For the service switching scenario shown in FIG. 4, the following describes a sending status of the first indication information in the following several possible implementations. The first indication information indicates that the inter-frequency measurement of the terminal device is performed by the low-power wake-up receiver and/or the measurement gap corresponding to the inter-frequency measurement of the terminal device does not take effect.

Manner 1: In a process in which the network device transmits a service (for example, transmits the first service or the second service) to the terminal device, the first indication information is carried in the last data packet of the first service. For example, a sending position of the first indication information is a position T1 shown in FIG. 4.

Optionally, the network device may include indication information in any data packet before the data packet (for example, the data packet at the position T1) in which the first indication information is located. The indication information indicates a specific data packet in which the first indication information is located. In this way, the terminal device can learn, in a timely and effective manner, the specific data packet in which the first indication information is located, and does not need to detect the first indication information for each received packet. In addition, the terminal device can perform inter-frequency measurement in a timely and effective manner when ensuring normal service transmission.

Manner 2: In a process in which the network device transmits a service (for example, transmits the first service or the second service) to the terminal device, the first indication information is carried in the first data packet of the second service. For example, a sending position of the first indication information is a position T3 shown in FIG. 4.

Optionally, the network device may include indication information in any data packet before the data packet (for example, the data packet at the position T3) in which the first indication information is located. The indication information indicates a specific data packet in which the first indication information is located. In this way, the terminal device can learn, in a timely and effective manner, the specific data packet in which the first indication information is located, and does not need to detect the first indication information for each received packet. In addition, the terminal device can perform inter-frequency measurement in a timely and effective manner when ensuring normal service transmission.

Manner 3: In a process in which the network device transmits a service (for example, transmits the first service or the second service) to the terminal device, the first indication information is carried in a radio resource control (Radio Resource Control, RRC) message, DCI, or a media access control control element (Media Access Control-Control Element, MAC-CE). A sending time (or sending position) of the RRC message, the DCI, or the MAC-CE is within a time period of switching between the first service and the second service. For example, the sending position of the RRC message, the DCI, or the MAC-CE is a position T2 shown in FIG. 4.

Optionally, in a possible implementation, the first indication information in Manner 3 is sent periodically.

In another possible implementation, a sending manner of the first indication information in Manner 3 complies with a rule. For example, the rule is related to a service arrival rule. For example, an XR service is used as an example. When a frame rate is 60 fps, a period of an XR video frame is 16.67 ms. Because a length of the DRX period is an integer, to better adapt to the XR service by the DRX period, the length of the DRX period is configured as 17 ms, 17 ms, and 16 ms in each 50 ms. The sending manner (or a sending rule) of the first indication information is associated with a configuration of the length of the DRX period. For example, the first indication information is also sent at an interval of 17 ms, then sent at an interval of 17 ms, and then sent at an interval of 16 ms within each 50 ms.

It should be understood that the sending time (or the sending position) of the first indication information depends on whether the network device has a resource for sending the first indication information, and also depends on an arrival time of the second service. It needs to be ensured that when the second service arrives, a receiver that performs the inter-frequency measurement of the terminal device is already determined.

### Scenario 2: A scenario in which cell load is heavy.

In a scenario in which cell load is heavy (or in a heavy network load scenario), resources are scarce. If the inter-frequency measurement of the terminal device is performed by the main receiver, the main receiver of the terminal device may receive an existing SSB. However, if the inter-frequency measurement of the terminal device is performed by the low-power wake-up receiver, the main receiver of the terminal device needs to receive a newly designed signal that adapts to the low-power wake-up receiver. A sending time (or sending position) of the signal is periodic. In this case, the network device needs to send both the SSB and the newly designed signal that adapts to the low-power wake-up receiver, which is unfavorable to resource efficiency of the network device. Therefore, in the scenario in which the cell load is heavy, the network device may indicate, by using the first indication information, that the inter-frequency measurement of the terminal device is performed by the main receiver. In this case, the network device does not send the newly designed signal that adapts to the low-power wake-up receiver.

It should be noted that, in descriptions of this application, "at least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. A character "/" generally represents an "or" relationship between associated objects. "At least one of the following items (pieces)" or a similar expression thereof means any combination of these items, including a singular item (piece) or any combination of plural items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit an order, a time sequence, priorities, or importance degrees of the plurality of objects. In addition, terms "include", "comprise", "have", and variations thereof that appear in this application all mean "including but not limited to", unless otherwise specifically emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which each step is performed by the corresponding device.

It should be noted that, in the foregoing embodiments, a part of steps may be selected for implementation, or an order of steps in the figure may be adjusted for implementation. This is not limited in this application. It should be understood that performing a part of steps in the figure, adjusting an order of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

It should be understood that the "step" in embodiments of this application is merely an example, is a representation method used to better understand the embodiments, and does not constitute a substantial limitation on execution of the solutions of this application. For example, the "step" may also be understood as a "feature". In addition, the step does not constitute any limitation on an execution order of the solutions of this application, and a new technical solution formed through an operation, for example, step order change, step combination, or step splitting, performed on this basis without affecting implementation of the overall solutions also falls within the scope disclosed in this application.

Based on a same concept, an embodiment of this application further provides a communication apparatus. The communication apparatus is applicable to the communication system architecture shown in FIG. 1. Optionally, the communication apparatus may be a communication device (for example, a first communication apparatus or a second communication apparatus) or a component (for example, a processor, a chip, a chip system, or a circuit) that can support a communication device in implementing a function required by a communication method. For example, the first communication apparatus may be a terminal device or a module (for example, a processor, a chip, a chip system, or a circuit) of a terminal device, or may be a logical node, a logical module, or software that can implement all or a part of functions of the terminal. The second communication apparatus may be a network device or a module (for example, a processor, a chip, a chip system, or a circuit) of a network device, or may be a logical node, a logical module, or software that can implement all or a part of functions of the network device. In an example, when the communication apparatus is the first communication apparatus (for example, the terminal device), the communication apparatus is configured to implement the technical solutions related to the first communication apparatus in the foregoing embodiments, or the module (for example, the chip) of the communication apparatus is configured to implement the technical solutions related to the first communication apparatus in the foregoing embodiments. Therefore, beneficial effect of the first communication apparatus in the foregoing embodiments can also be implemented. For example, the terminal device may be the terminal device 101 or the terminal device 102 shown in FIG. 1. For example, the communication apparatus is the chip disposed in the first communication apparatus. When the communication apparatus is the chip, the communication apparatus includes a transceiver and a processor, but does not include a memory. The transceiver exists as an input/output interface, and the input/output interface is used by the chip to implement sending/receiving of the first communication apparatus. The input/output interface may include an input interface and/or an output interface. The input interface may implement receiving of the first communication apparatus, and the output interface may be configured to implement sending of the first communication apparatus. The processor is configured to read and execute a corresponding computer program or instructions, so that a corresponding function of the first communication apparatus is implemented. Optionally, when the chip implements a corresponding function of the first communication apparatus in the foregoing embodiments, the input/output interface may implement sending and receiving operations performed by the first communication apparatus in the foregoing embodiments, and the processor may implement an operation other than the sending and receiving operations performed by the first communication apparatus in the foregoing embodiments. Specifically, for related specific descriptions, refer to the related descriptions of the first communication apparatus in the method embodiment shown in FIG. 2. Details are not described herein again.

In another example, when the communication apparatus is the second communication apparatus (for example, the network device), the communication apparatus is configured to implement the technical solutions related to the second communication apparatus in the foregoing embodiments, or the module (for example, the chip) of the communication apparatus is configured to implement the technical solutions related to the second communication apparatus in the foregoing embodiments. Therefore, beneficial effect of the second communication apparatus in the foregoing embodiments can also be implemented. For example, the network device may be the access network device 200 shown in FIG. 2. For example, the communication apparatus is the chip disposed in the second communication apparatus. When the communication apparatus is the chip, the communication apparatus includes a transceiver and a processor, but does not include a memory. The transceiver exists as an input/output interface, and the input/output interface is used by the chip to implement sending/receiving of the second communication apparatus. The input/output interface may include an input interface and/or an output interface. The input interface may implement receiving of the second communication apparatus, and the output interface may be configured to implement sending of the second communication apparatus. The processor is configured to read and execute a corresponding computer program or instructions, so that a corresponding function of the second communication apparatus is implemented. Optionally, when the chip implements a corresponding function of the second communication apparatus in the foregoing embodiments, the input/output interface may implement sending and receiving operations performed by the second communication apparatus in the foregoing embodiments, and the processor may implement an operation other than the sending and receiving operations performed by the second communication apparatus in the foregoing embodiments. Specifically, for related specific descriptions, refer to the related descriptions of the second communication apparatus in the method embodiment shown in FIG. 2. Details are not described herein again.

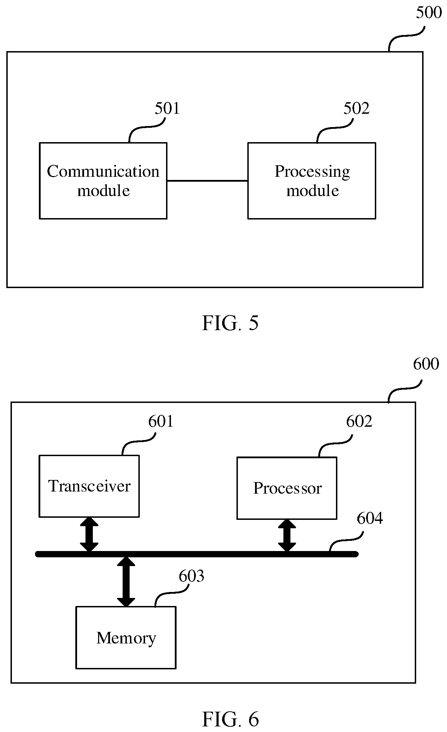

Refer to FIG. 5. A communication apparatus 500 includes a communication module 501 (which may also be referred to as a transceiver module, a transceiver unit, or a communication unit, and is configured to send and receive data) and a processing module 502 (which may also be referred to as a processing unit). The communication apparatus 500 is configured to implement functions of the first communication apparatus (for example, the terminal device) or the second communication apparatus (for example, the network device) in the method embodiment shown in FIG. 2.

Optionally, the communication module 501 may include a receiving module and/or a sending module. The receiving module may be configured to receive a signal (information, data, or the like) by the communication apparatus 500, and the sending module may be configured to send a signal (information, data, or the like) by the communication apparatus 500. The sending module may send a signal (information, data, or the like) under control of the processing module 502, and the receiving module may receive a signal (information, data, or the like) under control of the processing module 502.

When the communication apparatus 500 is configured to implement the functions of the first communication apparatus (for example, the terminal device) in the method embodiment shown in FIG. 2, the communication module 501 is configured to receive first indication information. The first indication information indicates whether inter-frequency measurement of the terminal device is allowed to be performed by a low-power wake-up receiver, or the first indication information indicates whether inter-frequency measurement of the terminal device is allowed to be performed by a main receiver. The processing module 502 is configured to perform a corresponding processing operation, for example, configured to perform the inter-frequency measurement, or may be configured to perform a procedure of comparing a delay threshold of a first service with a specified delay threshold.

When the communication apparatus 500 is configured to implement the functions of the second communication apparatus (for example, the network device) in the method embodiment shown in FIG. 2, the communication module 501 is configured to send first indication information. The first indication information indicates whether inter-frequency measurement of the terminal device is allowed to be performed by a low-power wake-up receiver, or the first indication information indicates whether inter-frequency measurement of the terminal device is allowed to be performed by a main receiver. The processing module 502 is configured to perform a corresponding processing operation, for example, configured to determine indicated content of the first indication information.

When the communication apparatus 500 is configured to implement the functions of the first communication apparatus or the second communication apparatus in the method embodiment shown in FIG. 2, for more detailed descriptions of the communication module 501 and the processing module 502, refer to the related descriptions of the first communication apparatus or the second communication apparatus in the method embodiment shown in FIG. 2. Details are not described herein again.

It should be understood that, in embodiments of this application, the communication module 501 may be implemented by using a transceiver or a transceiver-related circuit component, and the processing module 502 may be implemented by using a processor or a processor-related circuit component.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on a same concept, an embodiment of this application further provides a communication apparatus. The communication apparatus is applicable to the communication system architecture shown in FIG. 1. For example, the communication apparatus may be an apparatus (for example, a first communication apparatus (for example, a terminal device) or a second communication apparatus (for example, a network device)) configured to perform the communication method provided in embodiments of this application, or may be a device including an apparatus configured to perform the communication method provided in embodiments of this application. Optionally, the communication apparatus may alternatively be a chip disposed in the first communication apparatus (or the second communication apparatus). When the communication apparatus is the chip disposed in the first communication apparatus (or the second communication apparatus), the communication apparatus includes a transceiver and a processor, but does not include a memory. The transceiver exists as an input/output interface, and the input/output interface is used by the chip to implement sending/receiving of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the first communication apparatus (or the second communication apparatus) is implemented. Optionally, when the chip implements a corresponding function of the first communication apparatus (or the second communication apparatus) in the foregoing embodiments, the input/output interface may implement sending and receiving operations performed by the first communication apparatus (or the second communication apparatus) in the foregoing embodiments, and the processor may implement an operation other than the sending and receiving operations performed by the first communication apparatus (or the second communication apparatus) in the foregoing embodiments. Specifically, for related specific descriptions, refer to the related descriptions in the foregoing embodiments. Details are not described herein again. For example, the communication apparatus is the first communication apparatus (for example, the terminal device) or the second communication apparatus (for example, the network device). When the communication apparatus is configured to implement the technical solutions related to the first communication apparatus in the foregoing embodiments, the communication apparatus can also implement beneficial effect of the first communication apparatus in the foregoing method embodiments. When the communication apparatus is configured to implement the technical solutions related to the second communication apparatus in the foregoing embodiments, the communication apparatus can also implement beneficial effect of the second communication apparatus in the foregoing method embodiments. When the communication apparatus is configured to implement the technical solutions related to the network device in the foregoing embodiments, the communication apparatus can also implement beneficial effect of the network device in the foregoing method embodiments.

Refer to FIG. 6. A communication apparatus 600 includes a transceiver 601 and a processor 602. Optionally, the communication apparatus 600 further includes a memory 603. The transceiver 601, the processor 602, and the memory 603 are connected to each other. When the communication apparatus 600 is configured to implement the technical solutions related to the first communication apparatus (for example, the terminal device) provided in the foregoing embodiments, the transceiver 601 may be configured to implement functions of the communication module 501 when the communication module 501 performs the technical solutions related to the first communication apparatus, and the processor 602 is configured to implement functions of the processing module 502 when the processing module 502 performs the technical solutions related to the first communication apparatus. When the communication apparatus 600 is configured to implement the technical solutions related to the second communication apparatus (for example, the network device) provided in the foregoing embodiments, the transceiver 601 may be configured to implement functions of the communication module 501 when the communication module 501 performs the technical solutions related to the second communication apparatus, and the processor 602 is configured to implement functions of the processing module 502 when the processing module 502 performs the technical solutions related to the second communication apparatus.

Optionally, the transceiver 601, the processor 602, and the memory 603 are connected to each other through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by only one bold line in FIG. 6. However, it does not represent that there is only one bus or only one type of bus.

The transceiver 601 is configured to receive and send data. For example, when the communication apparatus 600 is the terminal device 101 shown in FIG. 1, the transceiver 601 implements communication with the access network device 200 shown in FIG. 1, or may implement communication with another device (for example, another terminal device or a server) outside the communication system architecture shown in FIG. 1. For example, the transceiver may be a transceiver apparatus integrated with a data sending/receiving function. For another example, the transceiver may alternatively include a transmitter and a receiver. The transmitter is configured to send data, and the receiver is configured to receive data.

Optionally, the transceiver 601 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 602. The receiver receives a signal, a message, information, data, or the like under control of the processor 602.

For functions of the processor 602, refer to the descriptions of the corresponding functions of the first communication apparatus or the second communication apparatus in the foregoing embodiments. Details are not described herein again. The processor 602 may be a central processing unit (central processing unit, CPU), a network processor (network processor, NP), a combination of a CPU and an NP, or the like. The processor 602 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. When implementing the foregoing functions, the processor 602 may be implemented by using hardware, or certainly may be implemented by using hardware executing corresponding software.

The memory 603 is configured to store program instructions and the like. Specifically, the program instructions may include program code. The program code includes computer operation instructions. The memory 603 may include a random access memory (random access memory, RAM), or may include a non-volatile memory (non-volatile memory), for example, at least one magnetic disk memory. The processor 602 executes the program instructions stored in the memory 603 to implement the foregoing functions, so as to implement the method steps that need to be performed by the first communication apparatus or the second communication apparatus in the foregoing embodiments.

Based on a same concept, an embodiment of this application further provides a communication system. The communication system includes a first communication apparatus (for example, a terminal device) and a second communication apparatus (for example, a network device). The first communication apparatus may be configured to implement the technical solutions related to the first communication apparatus in the foregoing embodiments, and the second communication apparatus may be configured to implement the technical solutions related to the second communication apparatus in the foregoing embodiments.

Based on a same concept, an embodiment of this application further provides a computer program product. The computer program product includes a computer program or instructions. When the computer program or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the method provided in the foregoing embodiments.

The storage medium may be any usable medium that can be accessed by a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same concept, an embodiment of this application further provides a chip. The chip may include a processor, and may further include a memory (or the chip is coupled to the memory). The chip executes program instructions in the memory, to perform the method provided in the foregoing embodiments. "Coupling" means that two components are directly or indirectly combined with each other. For example, coupling may refer to an electrical connection between the two components.

Based on a same concept, an embodiment of this application further provides a chip system. The chip system includes a processor, configured to support a computer apparatus in implementing functions related to the first communication apparatus (for example, the terminal device) or the second communication apparatus (for example, the network device) in the foregoing embodiments. In a possible design, the chip system further includes a memory, and the memory is configured to store a program and data that are necessary for the computer apparatus. The chip system may include a chip, or may include a chip and another discrete component.

All or a part of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

Steps of the methods described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may be connected to a processor, so that the processor can read information from the storage medium and write information into the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a terminal device, wherein the method comprises:
receiving first indication information, wherein
the first indication information indicates whether inter-frequency measurement of the terminal device is allowed to be performed by a low-power wake-up receiver; or
the first indication information indicates whether inter-frequency measurement of the terminal device is allowed to be performed by a main receiver.

2. The method according to claim 1, wherein the first indication information comprises a first parameter, and the first parameter indicates that the inter-frequency measurement of the terminal device is allowed to be performed by the main receiver or is allowed to be performed by the low-power wake-up receiver.

3. The method according to claim 1, wherein when the first indication information comprises a first parameter, the first indication information indicates that the inter-frequency measurement of the terminal device is allowed to be performed by the main receiver, or indicates that the inter-frequency measurement of the terminal device is not allowed to be performed by the low-power wake-up receiver; or when the first indication information does not comprise the first parameter, the first indication information indicates that the inter-frequency measurement of the terminal device is allowed to be performed by the low-power wake-up receiver, or indicates that the inter-frequency measurement of the terminal device is not allowed to be performed by the main receiver.

4. The method according to any one of claims 1 to 3, wherein when the first indication information indicates that the inter-frequency measurement of the terminal device is not allowed to be performed by the low-power wake-up receiver, or the first indication information indicates that the inter-frequency measurement of the terminal device is allowed to be performed by the main receiver, the first indication information further indicates an execution rule for the main receiver to perform the inter-frequency measurement; and
the execution rule is any one of the following:
the main receiver does not perform inter-frequency measurement period relaxation when performing the inter-frequency measurement of the terminal device; or
the main receiver performs inter-frequency measurement period relaxation by m times when performing the inter-frequency measurement of the terminal device, wherein
m is any value in {3, 5, 7, 10, 20}.

5. The method according to any one of claims 1 to 4, wherein the first indication information further indicates whether a measurement gap corresponding to the inter-frequency measurement of the terminal device takes effect.

6. The method according to claim 5, wherein when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the first indication information further indicates that the measurement gap corresponding to the inter-frequency measurement of the terminal device does not take effect.

7. The method according to any one of claims 1 to 4, wherein the method further comprises:
receiving second indication information, wherein the second indication information indicates whether a measurement gap corresponding to the inter-frequency measurement of the terminal device takes effect.

8. The method according to claim 7, wherein when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the second indication information indicates that the measurement gap corresponding to the inter-frequency measurement of the terminal device does not take effect.

9. The method according to any one of claims 1 to 8, wherein the method further comprises:
sending fourth indication information, wherein the fourth indication information comprises at least one of the following: a power consumption requirement, a coverage requirement, a performance requirement, a delay requirement, a receiver that is expected to perform the inter-frequency measurement, whether an inter-frequency measurement gap is expected to take effect, or that the first indication information is expected to be sent to indicate that the inter-frequency measurement is performed by the low-power wake-up receiver.

10. A communication method, applied to a network device, wherein the method comprises:
sending first indication information, wherein
the first indication information indicates whether inter-frequency measurement of a terminal device is allowed to be performed by a low-power wake-up receiver; or
the first indication information indicates whether inter-frequency measurement of the terminal device is allowed to be performed by a main receiver.

11. The method according to claim 10, wherein the first indication information comprises a first parameter, and the first parameter indicates that the inter-frequency measurement of the terminal device is allowed to be performed by the main receiver or is allowed to be performed by the low-power wake-up receiver.

12. The method according to claim 10, wherein when the first indication information comprises a first parameter, the first indication information indicates that the inter-frequency measurement of the terminal device is allowed to be performed by the main receiver, or indicates that the inter-frequency measurement of the terminal device is not allowed to be performed by the low-power wake-up receiver; or when the first indication information does not comprise the first parameter, the first indication information indicates that the inter-frequency measurement of the terminal device is allowed to be performed by the low-power wake-up receiver, or indicates that the inter-frequency measurement of the terminal device is not allowed to be performed by the main receiver.

13. The method according to any one of claims 10 to 12, wherein when the first indication information indicates that the inter-frequency measurement of the terminal device is not allowed to be performed by the low-power wake-up receiver, or the first indication information indicates that the inter-frequency measurement of the terminal device is allowed to be performed by the main receiver, the first indication information further indicates an execution rule for the main receiver to perform the inter-frequency measurement; and
the execution rule is any one of the following:
the main receiver does not perform inter-frequency measurement period relaxation when performing the inter-frequency measurement of the terminal device; or
the main receiver performs inter-frequency measurement period relaxation by m times when performing the inter-frequency measurement of the terminal device, wherein
m is any value in {3, 5, 7, 10, 20}.

14. The method according to any one of claims 10 to 13, wherein the first indication information further indicates whether a measurement gap corresponding to the inter-frequency measurement of the terminal device takes effect.

15. The method according to claim 14, wherein when the first indication information indicates that the inter-frequency measurement of the terminal device is allowed to be performed by the low-power wake-up receiver, or the first indication information indicates that the inter-frequency measurement of the terminal device is not allowed to be performed by the main receiver, the first indication information further indicates that the measurement gap corresponding to the inter-frequency measurement of the terminal device does not take effect.

16. The method according to any one of claims 10 to 13, wherein the method further comprises:
sending second indication information, wherein the second indication information indicates whether a measurement gap corresponding to the inter-frequency measurement of the terminal device takes effect.

17. The method according to claim 16, wherein when the first indication information indicates that the inter-frequency measurement of the terminal device is performed by the low-power wake-up receiver, or the first indication information indicates that the inter-frequency measurement of the terminal device is not allowed to be performed by the main receiver, the second indication information indicates that the measurement gap corresponding to the inter-frequency measurement of the terminal device does not take effect.

18. The method according to any one of claims 10 to 17, wherein the method further comprises:
determining indicated content of the first indication information based on a value relationship between a delay threshold of a first service and a specified delay threshold, wherein
the first service is a downlink service received by the terminal device.

19. The method according to claim 18, wherein the method further comprises:
receiving third indication information, wherein the third indication information comprises the delay threshold of the first service.

20. The method according to any one of claims 10 to 19, wherein the method further comprises:
receiving fourth indication information from the terminal device, wherein the fourth indication information comprises at least one of the following: a power consumption requirement, a coverage requirement, a performance requirement, a delay requirement, a receiver that is expected to perform the inter-frequency measurement, whether an inter-frequency measurement gap is expected to take effect, or that the first indication information is expected to be sent to indicate that the inter-frequency measurement is performed by the low-power wake-up receiver.

21. The method according to claim 20, wherein the method further comprises:
determining the indicated content of the first indication information based on the fourth indication information.

22. A communication apparatus, comprising a module or unit configured to perform the method according to any one of claims 1 to 9, or comprising a module or unit configured to perform the method according to any one of claims 10 to 21.

23. A communication apparatus, comprising:
a transceiver, configured to: receive and send data;
a memory, configured to store computer program instructions and data; and
a processor, configured to execute and invoke the computer program instructions and data in the memory, to enable the communication apparatus to perform the method according to any one of claims 1 to 9 or the method according to any one of claims 10 to 21.

24. A communication system, comprising a terminal device configured to perform the method according to any one of claims 1 to 9 and a network device configured to perform the method according to any one of claims 10 to 21.

25. A computer-readable storage medium, wherein the computer-readable storage medium stores a computer program or instructions, and when the computer program or the instructions are executed by a computer, the computer is enabled to perform the method according to any one of claims 1 to 9 or the method according to any one of claims 10 to 21.

26. A computer program product, wherein the computer program product comprises a computer program or instructions, and when the computer program or the instructions are run on a computer, the computer is enabled to perform the method according to any one of claims 1 to 9 or the method according to any one of claims 10 to 21.

27. A chip, wherein the chip comprises a processor, and the chip is configured to execute program instructions in a memory, to perform the method according to any one of claims 1 to 9 or the method according to any one of claims 10 to 21.
